# EUROPEAN PATENT APPLICATION

(11) **EP 4 357 190 A1**
(43) Date of publication of application: **24.04.2024**
(21) Application number: 21954490.5
(22) Date of filing: 24.08.2021
(51) Int. Cl.: B60L 53/60

(54) **CHARGING SYSTEM AND SHARING SYSTEM**

(71) Applicant: Huawei Digital Power Technologies Co., Ltd., Shenzhen, Guangdong 518043 (CN)
(72) Inventor: HE, Yuanning, Shenzhen, Guangdong 518129 (CN); KUANG, Ping, Shenzhen, Guangdong 518129 (CN); YI, Liqiong, Shenzhen, Guangdong 518129 (CN); HAN, Xinru, Shenzhen, Guangdong 518129 (CN); WANG, Yichang, Shenzhen, Guangdong 518129 (CN); LIN, Quanxi, Shenzhen, Guangdong 518129 (CN)
(74) Representative: Gill Jennings & Every LLP
(86) International application number: PCT/CN2021/114337
(87) International publication number: WO 2023/023947

(57) **Abstract**

This application provides a charging system and a sharing system. Different electric vehicles can be simultaneously charged through the charging system. Power sharing can be further implemented between different charging systems through the sharing system in a process of charging the different electric vehicles. The charging system provided in this application may include a plurality of power modules, a distributing switch module, and a plurality of charging ports. The distributing switch module includes a first distributing unit and a second distributing unit. The first distributing unit may connect a first part of power modules in the plurality of power modules to a first charging port, to distribute powers of the first part of power modules to the first charging port. The second distributing unit may connect a second part of power modules in the plurality of power modules to a second charging port, to distribute powers of the second part of power modules to the second charging port. Therefore, the first charging port may charge a first terminal, and the second charging port may charge a second terminal.

## Description

### TECHNICAL FIELD

This application relates to the field of new energy technologies, and more specifically, to a charging system and a sharing system in the field of new energy technologies.

### BACKGROUND

With development of science and technology, there is an increasingly high requirement for charging power of a terminal (for example, an electric vehicle (electric vehicle, EV)). The electric vehicle is usually charged through a charging system (for example, a charging pile). Because charging voltages required by different electric vehicles differ greatly, a single charging system cannot simultaneously charge the different electric vehicles. In addition, an output power of the single charging system cannot meet a high-power charging requirement for the electric vehicle, affecting a charging speed of the electric vehicle. Alternatively, the output power of the single charging system far exceeds a high-power fast charging requirement for the electric vehicle, and consequently, a power module in the charging system is unused. Therefore, there is an urgent need for a technical solution in which different electric vehicles can be charged at the same time.

### SUMMARY

This application provides a charging system and a sharing system, to simultaneously charge different electric vehicles, and implement power sharing between different charging systems in a process of charging the different electric vehicles.

According to a first aspect, this application provides a charging system. The charging system may include a plurality of power modules, a distributing switch module, and a plurality of charging ports. The distributing switch module may include a first distributing unit and a second distributing unit.

A first part of power modules (for example, power modules whose sequence numbers are odd numbers in the plurality of power modules) in the plurality of power modules may be connected to a first charging port in the plurality of charging ports through the first distributing unit. A second part of power modules in the plurality of power modules (for example, power modules whose sequence numbers are even numbers in the plurality of power modules) may be connected to a second charging port in the plurality of charging ports through the second distributing unit.

It can be learned from the foregoing connection relationship that the first distributing unit corresponds to the first part of power modules and the first charging port, and the second distributing unit corresponds to the second part of power modules and the second charging port.

Each power module in the first part of power modules and the second part of power modules may be configured to convert a first power (which may be represented by P₁) from an external power supply and output a second power (which may be represented by P₂). The first distributing unit may be configured to distribute, to the first charging port, the second power P₂ output by each power module in the first part of power modules.

Similar to the first distributing unit, the second distributing unit may be configured to distribute, to the second charging port, the second power P₂ output by each power module in the second part of power modules.

Therefore, the first charging port may be configured to charge a first terminal (for example, a first electric vehicle) based on the power distributed by the first distributing unit.

Similar to the first charging port, the second charging port may be configured to charge a second terminal (for example, a second electric vehicle) based on the power distributed by the second distributing unit.

In the charging system provided in this application, the first distributing unit and the second distributing unit in the distributing switch module distribute, to different charging ports (namely, the first charging port and the second charging port), the power (namely, the second power P₂) output by each power module in the first part of power modules and the second part of power modules. In this way, different electric vehicles (namely, the first electric vehicle and the second electric vehicle) can be simultaneously charged through the different charging ports, and an output power of the charging system can meet charging requirements for different electric vehicles. This improves a charging speed of the electric vehicle and utilization of a power module in the charging system.

It should be noted that the first power P₁ may be provided for a plurality of power modules through a same external power supply (that is, power is supplied to the plurality of power modules through the same external power supply), or the first power P₁ may be provided for the plurality of power modules through different external power supplies.

Further, the first power P₁ may be determined by both an output voltage and an output current of the external power supply, and the second power P₂ is determined by both an output voltage and an output current of the power module.

Still further, the output voltage of the external power supply may be a direct current voltage, or may be an alternating current voltage.

Therefore, in an example, when the output voltage of the external power supply is a direct current voltage, the foregoing power module may be a direct current (direct current, DC)/DC conversion module. In other words, the power module may convert a direct current voltage of a voltage level from the external power supply, and output a direct current voltage of another voltage level (that is, the output voltage of the power module may be a direct current voltage).

For example, the power module may perform conversion (for example, voltage reduction) on a direct current voltage of a high voltage level from the external power supply, and output a direct current voltage of a low voltage level.

In another example, when the output voltage of the external power supply is an alternating current voltage, the foregoing power module may be an alternating current (alternating current, AC)/DC conversion module. In other words, the power module may convert (which may also be referred to as rectification) the alternating current voltage from the external power supply, and output a direct current voltage (that is, the output voltage of the power module may be a direct current voltage).

It should be noted that a property (that is, an alternating current voltage or a direct current voltage) of the output voltage of the power module is determined by a property (that is, an alternating current or a direct current) of a voltage required by the electric vehicle.

In a possible implementation, both the first distributing unit and the second distributing unit may include a plurality of first switching switches. Second powers output by a plurality of power modules are distributed to different charging ports through the plurality of first switching switches, so that different electric vehicles are simultaneously charged.

Further, the distributing switch module may further include a plurality of second switching switches. The plurality of second switching switches each may connect two adjacent power modules in the first part of power modules and the second part of power modules. In other words, in this application, two adjacent power modules in the plurality of power modules can be interconnected through the plurality of second switching switches, and the second powers from the power modules are distributed to the corresponding charging ports through the corresponding first switching switches.

For example, a first power module and a second power module (which are adjacent power modules) in the plurality of power modules may be connected through a second switching switch (that is, a second switching switch is disposed between the first power module and the second power module), and a third power module and a fourth power module (which are adjacent power modules) in the plurality of power modules may be connected through another second switching switch (that is, a second switching switch is disposed between the third power module and the fourth power module).

For another example, the first power module and the second power module (which are adjacent power modules) may be connected through a second switching switch; the second power module and the third power module (which are adj acent power modules) are not connected through a second switching switch (that is, no second switching switch is set between the second power module and the third power module); the third power module and the fourth power module are not connected through a second switching switch (that is, no second switching switch is set between the third power module and the fourth power module); and the fourth power module and a fifth power module (which are adjacent power modules) may be connected through another second switching switch.

Certainly, arrangement of the second switching switch is not limited to the foregoing enumerated cases. Any adjacent power modules may be connected through the second switching switch, and the second power from the power module is transmitted to the corresponding charging port through the second switching switch and the corresponding first switching switch. Details are not listed in this application.

Further, the charging system provided in this application may further include a sharing switch module and a plurality of sharing ports. The plurality of sharing ports may include a first sharing port and a second sharing port.

Therefore, the sharing switch module may connect the first part of power modules to the first sharing port, and the sharing switch module may connect the second part of power modules to the second sharing port. In other words, the plurality of power modules are connected to the plurality of sharing ports through the sharing switch module.

In a possible implementation, the sharing switch module may include a first sharing unit and a second sharing unit. The first part of power modules may be connected to the first sharing port through the first sharing unit, and the second part of power modules may be connected to the second sharing port through the second sharing unit.

Optionally, both the first sharing unit and the second sharing unit may include a plurality of third switching switches.

In this way, the second power P₂ output by each of the plurality of power modules may be shared with a corresponding sharing port through a corresponding third switching switch. In addition, a power (namely, a power transmitted to a next charging system through the sharing port) transmitted at the sharing port may be flexibly controlled by controlling an action of the third switching switch.

Further, in addition to the first sharing unit and the second sharing unit, the sharing switch module further includes a plurality of fourth switching switches. The plurality of fourth switching switches may connect the first charging port, the second charging port, the first sharing port, and the second sharing port. In other words, in this application, the plurality of charging ports may be interconnected with the plurality of sharing ports through the fourth switching switches.

In this application, the plurality of fourth switching switches are disposed between the plurality of charging ports and the plurality of sharing ports, and an action of the fourth switch is controlled, so that the output power of each of the plurality of power modules can be flexibly distributed to any charging port (for example, the first charging port or the second charging port) or any sharing port (for example, the first sharing port or the second sharing port). This not only improves a charging power of a single charging port and utilization of a single power module, but also enables, through the sharing switch module, the charging system to have a capability of sharing the power to the external. Therefore, flexibility of the charging system is greatly improved.

In a possible implementation, the first switching switch, the second switching switch, the third switching switch, and the fourth switching switch may be contactors, semiconductor switches (which may also be referred to as solid-state switches), semiconductor hybrid switches (which may be referred to as hybrid switches for short), or the like.

Further, the foregoing contactor may be a single-contact contactor (also referred to as a single-pole contactor), or may be a dual-contact contactor (also referred to as a double-pole contactor). Certainly, the contactor may alternatively be another type of contactor. A type of the contactor is not limited in this embodiment of this application.

According to a second aspect, this application provides a sharing system. The sharing system may include at least two (that is, a plurality of) charging systems connected in parallel.

According to the sharing system provided in this application, different electric vehicles can be simultaneously charged through charging ports of different charging systems, and a power can be shared between the different charging systems. An output power (namely, a charging power provided by the charging system for the electric vehicle through the charging port) of the charging system can be greatly increased through power sharing. In other words, power sharing does not affect simultaneous charging of different electric vehicles by the sharing system, thereby improving a charging speed of the electric vehicle and utilization of a power module in the charging system.

It should be noted that the at least two charging systems may be supplied with power through a same external power supply, or an external power supply may be configured for each charging system to implement independent power supply to the charging system. A manner of supplying power to the at least two charging systems is not limited in this application.

In a possible implementation, the at least two charging systems may be connected through a power sharing bus.

Further, a control switch or a connecting member may be disposed on the power sharing bus.

Optionally, the control switch may be a contactor, a circuit breaker, an isolation switch, or the like. This is not limited in this application.

Optionally, the connecting member may be a connector, a detachable copper bar, or the like. This is not limited in this application.

Certainly, in this application, another device that can implement a connection/disconnection function may be disposed on the power sharing bus. This is not limited in this embodiment of this application.

Further, the power sharing bus may be a copper bar, an aluminum bar, a cable, or the like. This is not limited in this application.

It should be understood that the second aspect of this application is consistent with the technical solution of the first aspect of this application, and beneficial effects achieved by the aspects and corresponding feasible implementations are similar. Details are not described again.

### BRIEF DESCRIPTION OF DRAWINGS

FIG. 1 is a schematic diagram of a structure of a charging system according to an embodiment of this application;
FIG. 2 is a schematic diagram of a structure of a charging system according to an embodiment of this application;
FIG. 3 is a schematic diagram of a structure of a charging system according to an embodiment of this application;
FIG. 4 is a schematic diagram of a structure of a sharing switch module according to an embodiment of this application;
FIG. 5 is a schematic diagram of a structure of a charging system according to an embodiment of this application;
FIG. 6 is a schematic diagram of a structure of a sharing switch module according to an embodiment of this application;
FIG. 7 is a schematic diagram of a structure of a charging system according to an embodiment of this application;
FIG. 8 is a schematic diagram of a structure of a charging system according to an embodiment of this application;
FIG. 9 is a schematic diagram of a structure of a charging system according to an embodiment of this application;
FIG. 10 is a schematic diagram of a structure of a charging system according to an embodiment of this application;
FIG. 11 is a schematic diagram of a structure of a charging system according to an embodiment of this application;
FIG. 12 is a schematic diagram of a structure of a charging system according to an embodiment of this application;
FIG. 13 is a schematic diagram of a structure of a sharing switch module according to an embodiment of this application;
FIG. 14 is a schematic diagram of a structure of a charging system according to an embodiment of this application;
FIG. 15 is a schematic diagram of a structure of a charging system according to an embodiment of this application;
FIG. 16 is a schematic diagram of a structure of a sharing switch module according to an embodiment of this application;
FIG. 17 is a schematic diagram of a structure of a charging system according to an embodiment of this application;
FIG. 18 is a schematic diagram of a structure of a sharing switch module according to an embodiment of this application;
FIG. 19 is a schematic diagram of a structure of a sharing system according to an embodiment of this application;
FIG. 20 is a schematic diagram of a structure of a sharing system according to an embodiment of this application;
FIG. 21A, FIG. 21B, and FIG. 21C are a schematic diagram of a structure of a sharing system according to an embodiment of this application;
FIG. 22A, FIG. 22B, and FIG. 22C are a schematic diagram of a structure of a sharing system according to an embodiment of this application; and
FIG. 23A, FIG. 23B, and FIG. 23C are a schematic diagram of a structure of a sharing system according to an embodiment of this application.

### DESCRIPTION OF EMBODIMENTS

The following describes technical solutions of this application with reference to accompanying drawings.

To make the objectives, technical solutions, and advantages of this application clearer, the following clearly and completely describes the technical solutions in this application with reference to the accompanying drawings in this application. It is clear that, the described embodiments are merely some rather than all of the embodiments of this application. All other embodiments obtained by a person of ordinary skill in the art based on embodiments of this application without creative efforts shall fall within the protection scope of this application.

In the specification, embodiments, claims, and accompanying drawings of this application, terms such as "first", and "second" are merely intended for distinguishing and description, and shall not be understood as an indication or implication of relative importance or an indication or implication of an order. In addition, terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that in this application, "at least one (item)" refers to one or more and "a plurality of" refers to two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

With development of science and technology, there is an increasingly high requirement for a charging power of a terminal (an electric vehicle EV is used as an example in embodiments of this application). The electric vehicle is usually charged through a charging system (for example, a charging pile). Because charging voltages required by different electric vehicles differ greatly, a single charging system cannot simultaneously charge the different electric vehicles through a charging port (for example, a charging gun). In addition, an output power of the single charging system cannot meet a high-power charging requirement for the electric vehicle, affecting a charging speed of the electric vehicle. Alternatively, the output power of the single charging system far exceeds a high-power fast charging requirement for the electric vehicle, and consequently, a power module in the charging system is unused.

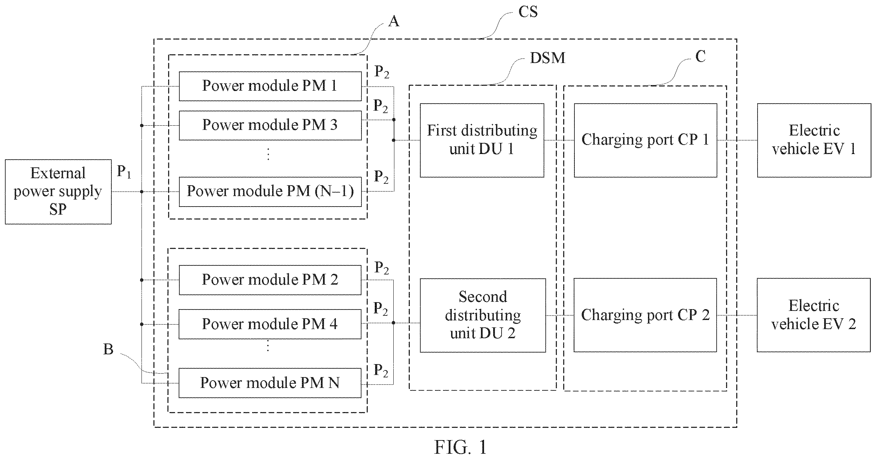

To resolve the foregoing technical problem, an embodiment of this application provides a charging system, as shown in FIG. 1. The charging system (charging system, CS) may include a plurality of power modules (namely, a first part of power modules A (including a power module PM (power module) 1, a power module 3, ..., and a power module PM (N-1) in FIG. 1) and a second part of power modules B (including a power module PM 2, a power module 4, ..., and a power module PM N)), a distributing switch module (distributing switch module, DSM), and a plurality of charging ports C (for example, a charging port (charging port, CP) 1 and a charging port CP 2 in FIG. 1). The distributing switch module DSM may include a distributing unit (distributing unit, DU) 1 (namely, a first distributing unit) and a distributing unit DU 2 (namely, a second distributing unit).

Further, referring to FIG. 1, each of input ends of power modules in the first part of power modules A and power modules in the second part of power modules B (namely, the power module PM 1 to the power module PM T in FIG. 1) are connected to an external power supply (power supply, PS), output ends of the power modules in the first part of power modules A are connected to the charging port CP 1 through the distributing unit DU 1, and the charging port CP 1 is connected to an electric vehicle EV 1, to charge the electric vehicle EV 1. Similarly, output ends of the power modules in the second part of power modules B is connected to the charging port CP 2 through the distributing unit DU 2, and the charging port CP 2 is connected to an electric vehicle EV 2, to charge the electric vehicle EV 2.

It can be learned from the foregoing connection relationship that the distributing unit DU 1 corresponds to the first part of power modules A and the charging port CP 1, and the distributing unit DU 2 corresponds to the second part of power modules B and the charging port CP 2.

Based on the structure shown in FIG. 1, the power modules (namely, the power module PM 1 to the power module PM N) in the first part of power modules A and the second part of power modules B each may be configured to convert a first power (which may be represented by P₁) from the external power supply PS and output a second power (which may be represented by P2).

Further, the distributing unit DU 1 may be configured to distribute, to the charging port CP 1, the second power P₂ output by each power module in the first part of power modules A. Similar to the distributing unit DU 1, the distributing unit DU 2 may be configured to distribute, to the charging port CP 2, the second power P₂ output by each power module in the second part of power modules B.

Further, the charging port CP 1 may be configured to charge the electric vehicle EV 1 based on the power distributed by the distributing unit DU 1. Similar to the charging port CP 1, the charging port CP 2 may be configured to charge the electric vehicle EV 2 based on the power distributed by the distributing unit DU 2.

In the charging system provided in this embodiment of this application, the distributing unit DU 1 and the distributing unit DU 2 in the distributing switch module DSM distribute, to different charging ports (namely, the charging port CP 1 and the charging port CP 2), the power (namely, the second power P₂) output by each power module in the first part of power modules A and the second part of power modules B. In this way, different electric vehicles (namely, the electric vehicle EV 1 and the second electric vehicle EV 2) can be simultaneously charged through the different charging ports, and an output power of the charging system can meet charging requirements for different electric vehicles. This improves a charging speed of the electric vehicle and utilization of a power module in the charging system.

It should be noted that in this embodiment of this application, an example in which the first power P₁ is provided for a plurality of power modules through a same external power supply PS (that is, power is supplied to the plurality of power modules through the same external power supply PS) is used. Certainly, the first power P₁ may be provided for the plurality of power modules through different external power supplies.

Further, the first power P₁ may be determined by both an output voltage and an output current of the external power supply PS, and the second power P₂ is determined by both an output voltage and an output current of the power module.

Still further, the output voltage of the external power supply PS may be a direct current voltage, or may be an alternating current voltage.

Therefore, in an example, when the output voltage of the external power supply PS is a direct current voltage, the foregoing power module may be a DC/DC conversion module. In other words, the power module may convert a direct current voltage of a voltage level from the external power supply PS, and output a direct current voltage of another voltage level (that is, the output voltage of the power module may be a direct current voltage).

For example, the power module may perform conversion (for example, voltage reduction) on a direct current voltage of a high voltage level from the external power supply PS, and output a direct current voltage of a low voltage level.

In another example, when the output voltage of the external power supply PS is an alternating current voltage, the foregoing power module may be an AC/DC conversion module. In other words, the power module may convert (which may also be referred to as rectification) the alternating current voltage from the external power supply PS, and output a direct current voltage (that is, the output voltage of the power module may be a direct current voltage).

It should be noted that a property (that is, an alternating current voltage or a direct current voltage) of the output voltage of the power module is determined by a property of a voltage required by the electric vehicle. Because a voltage usually required by the electric vehicle is a direct current voltage, the output voltage of the power module in the foregoing embodiment of this application is described by using the direct current voltage as an example.

It may be understood that if the voltage required by the electric vehicle is an alternating current voltage, the following two cases exist:

Case 1: When the output voltage of the external power supply PS is a direct current voltage, the foregoing power module may be a DC/AC conversion module. In other words, the power module may convert (which may be referred to as inversion) the direct current voltage from the external power supply PS, and output an alternating current voltage (that is, the output voltage of the power module may be an alternating current voltage).

Case 2: When the output voltage of the external power supply PS is an alternating current voltage, the foregoing power module may be an AC/AC conversion module. In other words, the power module may convert an alternating current voltage of a voltage level from the external power supply PS, and output an alternating current voltage of another voltage level (that is, the output voltage of the power module may be an alternating current voltage).

For example, the power module may perform conversion (for example, voltage reduction) on an alternating current voltage of a high voltage level from the external power supply PS, and output an alternating current voltage of a low voltage level.

The following describes a charging system provided in an embodiment of this application by using an example in which the charging system CS includes an even quantity (represented by N) of power modules.

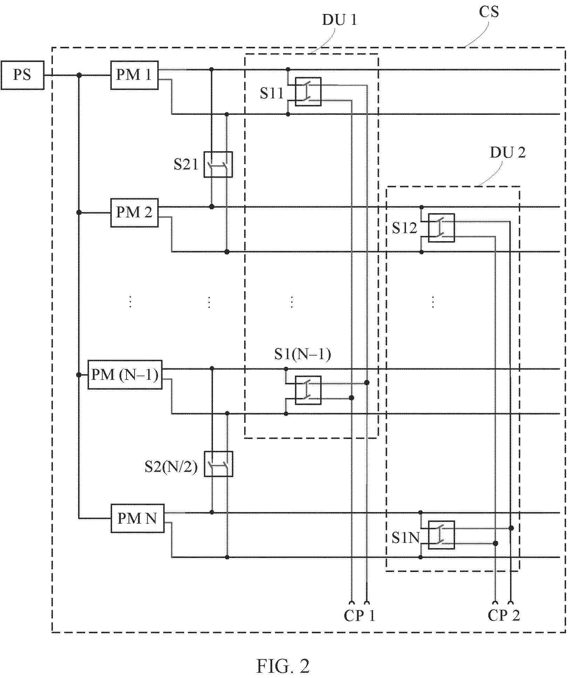

In a possible implementation, as shown in FIG. 2, the distributing switch module DSM may include the distributing unit DU 1 and the distributing unit DU 2. The distributing unit DU 1 may include a first switching switch S (switch) 11, a first switching switch S13 (namely, a first switching switch that is connected to a power module PM 3 (not shown in FIG. 2), and not shown in FIG. 2, .. , and a first switching switch S1(N-1). The distributing unit DU 2 may include a first switching switch S12, a first switching switch S14 (namely, a first switching switch that is connected to a power module PM 4 (not shown in FIG. 2), and not shown in FIG. 2, ..., and a first switching switch S1N. It can be learned from FIG. 2 that, the distributing switch module DSM includes N first switching switches in total: the first switching switch S11, the first switching switch S12, ..., the first switching switch S1(N-1), and the first switching switch S1N.

The first switching switch S11, the first switching switch S13, ..., and the first switching switch S1(N-1) may connect the power module PM 1, the power module PM 3, .. , and the power module PM (N-1) in FIG. 2 to the charging port CP 1. The first switching switch S12, the first switching switch S14, ..., and the first switching switch S1N may connect the power module PM 2, the power module PM 4, ..., and the power module PM N in FIG. 2 to the charging port CP 2. In other words, in this embodiment of this application, the N power modules are connected to the charging port CP 1 and the charging port CP 2 through the N first switching switches.

Referring to FIG. 2, the power module PM 1 to the power module PM N may convert the first power P₁ from the external power supply PS and output the second power P₂.

Then, the first switching switch S11 may distribute, to the charging port CP 1, a second power P₂ output by the power module PM 1, and the first switching switch S1(N-1) may also distribute, to the charging port CP 1, a second power P₂ output by the power module PM (N-1) or the like. Certainly, the first switching switch S13 or the like in the distributing switch module DSM may also distribute, to the charging port CP 1, a second power P₂ output by the power module PM 3 or the like.

Similar to the first switching switch S11, the first switching switch S13, ..., the first switching switch S1(N-1), or the like, the first switching switch S12 may distribute, to the charging port CP 2, a second power P₂ output by the power module PM 2, and the first switching switch S1N may also distribute, to the charging port CP 2, a second power P₂ output by the power module PM N. Certainly, the first switching switch S14 or the like in the distributing switch module DSM may also distribute, to the charging port CP 2, a second power P₂ output by the power module PM 4 or the like.

Therefore, the charging port CP 1 may charge the electric vehicle EV 1 based on the power distributed by the distributing unit DU 1. Similar to the charging port CP 1, the charging port CP 2 may charge the electric vehicle EV 2 based on the power distributed by the distributing unit DU 2.

Further, still referring to FIG. 2, in addition to the N first switching switches, the distributing switch module DSM may further include N/2 second switching switches (namely, a second switching switch S21, ..., and a second switching switch S2(N/2) in FIG. 2).

The N/2 second switching switches each may connect two adjacent power modules in the N power modules in FIG. 2. In other words, in this embodiment of this application, two adjacent power modules in the N power modules may be interconnected through the N/2 second switching switches.

For example, the power module PM 1 and the power module PM 2 may be interconnected through the second switching switch S21. Therefore, the second power P₂ output by the power module PM 2 may be distributed to the charging port CP 1 through the second switching switch S21 and the first switching switch S11, or the second power P₂ output by the power module PM 1 may be distributed to the charging port CP 2 through the second switching switch S21 and the first switching switch S12.

For another example, the power module PM 3 and the power module PM 4 may be interconnected through a second switching switch S22 (namely, a second switching switch that is connected between the power module PM 3 (not shown in FIG. 2) and the power module PM 4 (not shown in FIG. 2), and not shown in FIG. 2). Therefore, the second power P₂ output by the power module PM 4 may be distributed to the charging port CP 1 through the second switching switch S22 and the first switching switch S13 (namely, a first switching switch that is connected to the power module PM 3, and not shown in FIG. 2), or the second power P₂ output by the power module PM 3 may be distributed to the charging port CP 2 through the second switching switch S22 and the first switching switch S14 (namely, a first switching switch connected to the power module PM 4).

For still another example, the power module PM N and the power module PM (N-1) may be interconnected through the second switching switch S2(N/2). Therefore, the second power P₂ output by the power module PM N may be distributed to the charging port CP 1 through the second switching switch S2(N/2) and the first switching switch S1(N-1), and the second power P₂ output by the power module PM (N-1) may be distributed to the charging port CP 2 through the second switching switch S2(N/2) and the first switching switch S1N.

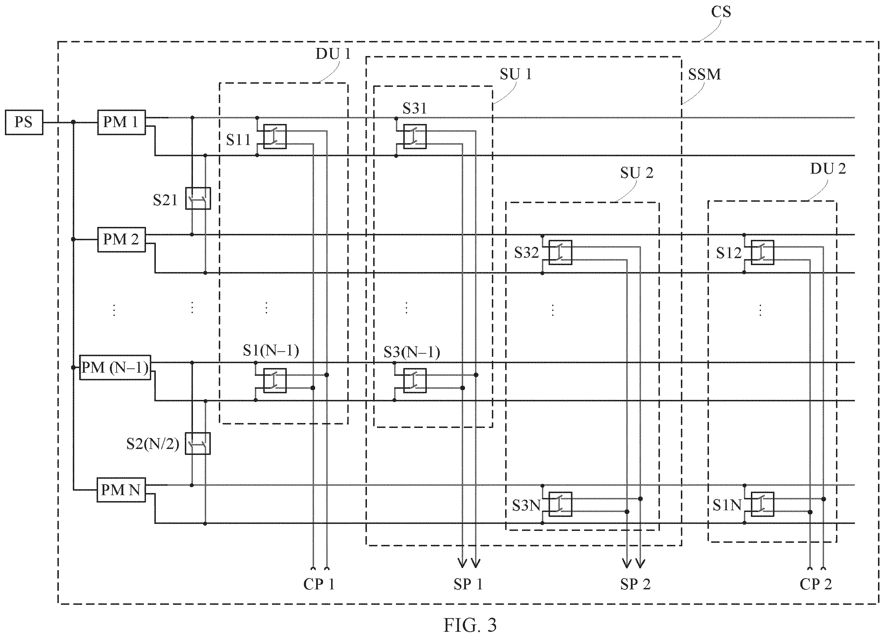

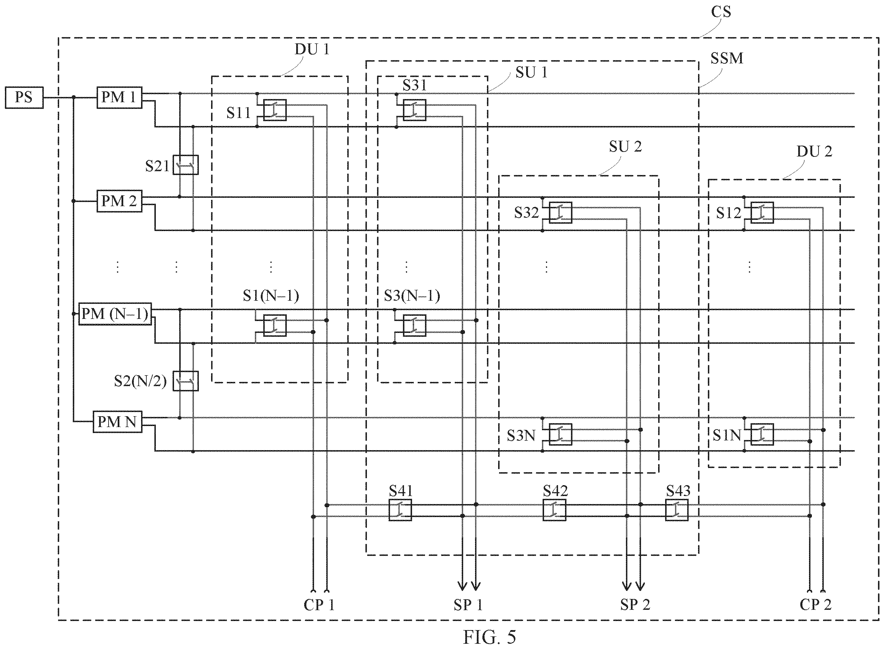

In a possible implementation, based on FIG. 2, the charging system CS provided in this embodiment of this application may further include a sharing switch module (sharing switch module, SSM) and a plurality of sharing ports (two sharing ports (namely, a sharing port SP 1 and a sharing port SP 2 in FIG. 3 and FIG. 5 are used as an example in this embodiment of this application), as shown in FIG. 3 and FIG. 5.

Further, the sharing switch module SSM may include a sharing unit (sharing unit, SU) 1 (namely, a first sharing unit) and a sharing unit SU 2 (namely, a second sharing unit). As shown in FIG. 3 to FIG. 6, the sharing unit SU 1 may include a third switching switch S31, a third switching switch S33 (namely, a third switching switch that is connected to the power module PM 3 (not shown in FIG. 3 and FIG. 5), and not shown in FIG. 3 to FIG. 6, ..., and a third switching switch S3(N-1). The sharing unit SU 2 may include a third switching switch S32, a third switching switch S34 (namely, a third switching switch that is connected to the power module PM 4 (not shown in FIG. 3 and FIG. 5), and not shown in FIG. 3 to FIG. 6, ..., and a third switching switch S3N.

Therefore, the sharing unit SU 1 (specifically, the third switching switch in the sharing unit SU 1) may connect each of the power modules (namely, the power modules whose sequence numbers are odd numbers, such as the power module PM 1 and the power module PM 3) in the first part of power modules to the sharing port SP 1, and the sharing unit SU 2 (specifically, the third switching switch in the sharing unit SU 2) may connect each of the power modules (namely, the power modules whose sequence numbers are even numbers, such as the power module PM 2 and the power module PM 4) in the second part of power modules to the sharing port SP 2. In other words, the N power modules may be connected to the sharing port SP 1 and the sharing port SP 2 through the sharing unit SU 1 and the sharing unit SU 2 in the sharing switch module SSM in this embodiment of this application.

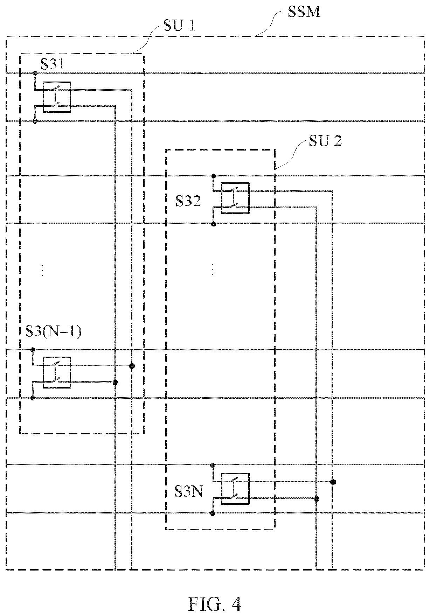

Referring to FIG. 3 and FIG. 4, the sharing switch module SSM may include the N third switching switches (namely, the third switching switch S31, the third switching switch S32, ..., the third switching switch S3(N-1), and the third switching switch S3N in FIG. 3 and FIG. 4) in the sharing unit SU 1 and the sharing unit SU 2.

It can be learned from FIG. 3 that the N third switching switches may connect the N power modules to the sharing port SP 1 and the sharing port SP 2. In other words, the N power modules may be connected to the sharing port SP 1 and the sharing port SP 2 through the N third switching switches in this embodiment of this application.

With reference to FIG. 3 and the foregoing connection relationship, it can be learned that the second power P₂ output by each of the N power modules may be shared with a corresponding sharing port through a corresponding third switching switch. In addition, a power (namely, a power transmitted to a next charging system through the sharing port) transmitted at the sharing port may be controlled by controlling an action of the third switching switch.

For example, the second power P₂ output by the power module PM 1 may be shared with the sharing port SP 1 through the third switching switch S31.

For another example, the second power P₂ output by the power module PM (N-1) may be shared with the sharing port SP 1 through the third switching switch S3(N-1).

It should be noted that, the third switching switch S33, a third switching switch S35 (namely, a third switching switch that is connected to a power module PM 5 (not shown in FIG. 3), and not shown in FIG. 3), or the like may also share a second power P₂ output by the corresponding power module (for example, the third switching switch S33 corresponds to the power module PM 3, and the third switching switch S35 corresponds to the power module PM 5) with the sharing port SP 1.

For still another example, the second power P₂ output by the power module PM 2 may be shared with the sharing port SP 2 through the third switching switch S32.

For yet another example, the second power P₂ output by the power module PM N may be shared with the sharing port SP 2 through the third switching switch S3N.

It should be noted that, the third switching switch S34, a third switching switch S36 (namely, a third switching switch that is connected to a power module PM 6 (not shown in FIG. 3), and not shown in FIG. 3), or the like may also share a second power P₂ output by the corresponding power module (for example, the third switching switch S34 corresponds to the power module PM 4, and the third switching switch S36 corresponds to the power module PM 6) with the sharing port SP 2.

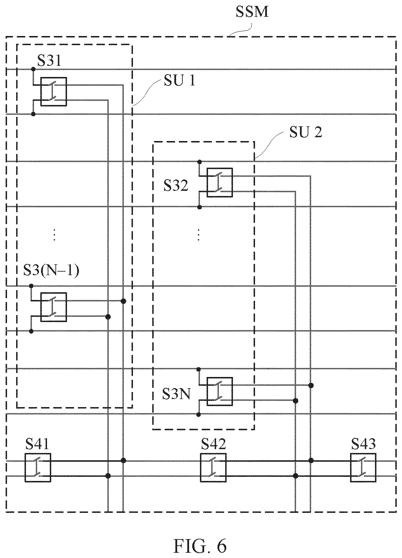

On the basis of FIG. 3 and FIG. 4, in addition to the N third switching switches (namely, the third switching switch S31, the third switching switch S32, ..., the third switching switch S3(N-1), and the third switching switch S3N in FIG. 5 and FIG. 6) in the sharing unit SU 1 and the sharing unit SU 2, the foregoing sharing switch module SSM may further include a plurality of fourth switching switches (namely, a fourth switching switch S41, a fourth switching switch S42, and a fourth switching switch S43 in FIG. 5 and FIG. 6), as shown in FIG. 5 and FIG. 6.

It can be learned from FIG. 5 that, the third switching switch in the sharing unit SU 1 may connect the power module PM 1, the power module PM 3 (not shown in FIG. 5), ..., and the power module PM (N-1) to the sharing port SP 1; the third switching switch in the sharing unit SU 2 may connect the power module PM 2, the power module PM 4 (not shown in FIG. 5), . . . , and the power module PM N to the sharing port SP 2; and the fourth switching switch S41, the fourth switching switch S42, and the fourth switching switch S43 may connect the charging port CP 1, the charging port CP 2, the sharing port SP 1, and the sharing port SP 2. In other words, the N power modules may be connected to the sharing port SP 1 and the sharing port SP 2 through the N third switching switches in this embodiment of this application. In addition, the charging port CP 1, the charging port CP 2, the sharing port SP 1, and the sharing port SP 2 may be further connected through the fourth switching switch S41, the fourth switching switch S42, and the fourth switching switch S43 in this embodiment of this application.

It can be learned from FIG. 5 and the foregoing connection relationship that, a power transmitted at the sharing port may be controlled through a plurality of third switching switches and a plurality of fourth switching switches, and the second power P₂ output by each of the N power modules may be shared among the charging port CP 1, the charging port CP 2, the sharing port SP 1, and the sharing port SP 2. In other words, output powers of the plurality of power modules may be distributed to any charging port or any sharing port through the plurality of fourth switching switches.

In this embodiment of this application, an output power of any power module may be distributed to any charging port and any sharing port through the distributing switch module DSM and the sharing switch module SSM. This not only improves a charging power of a single charging port and utilization of a single power module, but also enables, through the sharing switch module SSM, the charging system to have a capability of sharing the power to the external. Therefore, flexibility of the charging system is greatly improved.

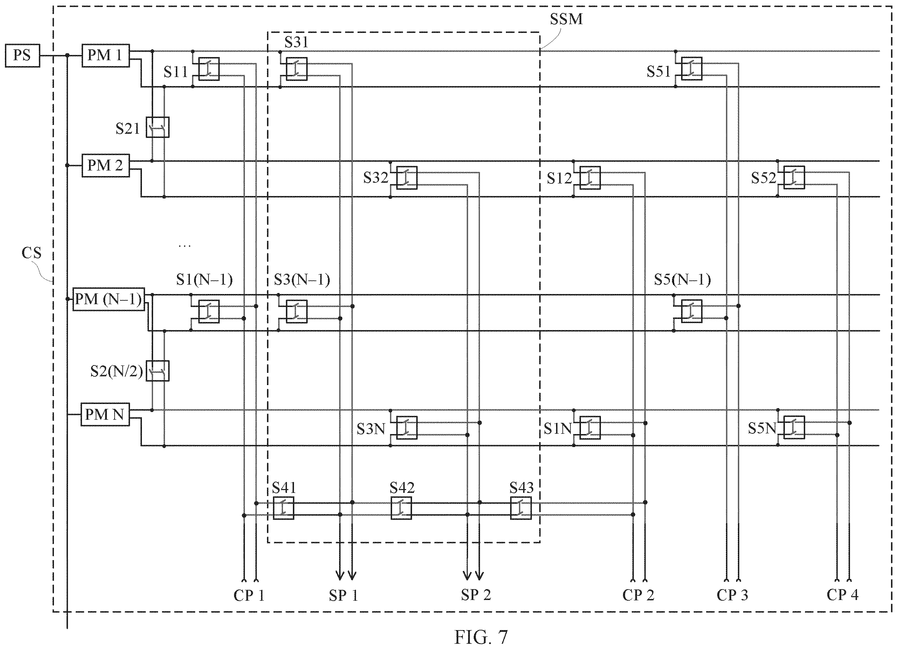

In a possible implementation, an embodiment of this application may provide a charging system CS based on FIG. 5, shown in FIG. 7. Referring to FIG. 7, the charging system CS may further include N fifth switching switches (namely, a fifth switching switch S51, a fifth switching switch S52, ..., a fifth switching switch S5(N-1), and a fifth switching switch S5N in FIG. 7).

It can be learned from FIG. 7 that N power modules PMs may be connected to corresponding charging ports through corresponding fifth switching switches.

For example, a power module PM 1 may be connected to a charging port CP 3 through the fifth switching switch S51.

For another example, a power module PM 2 may be connected a charging port CP 4 through the fifth switching switch S52.

In this embodiment of this application, more charging ports (namely, the charging port CP 3 and the charging port CP 4 in FIG. 7) may be provided through the N fifth switching switches, to share output powers of a plurality of power modules. In addition, the charging system CS may charge more electric vehicles (such as an electric vehicle EV 3 and an electric vehicle EV 4) through the charging port CP 3 and the charging port CP 4.

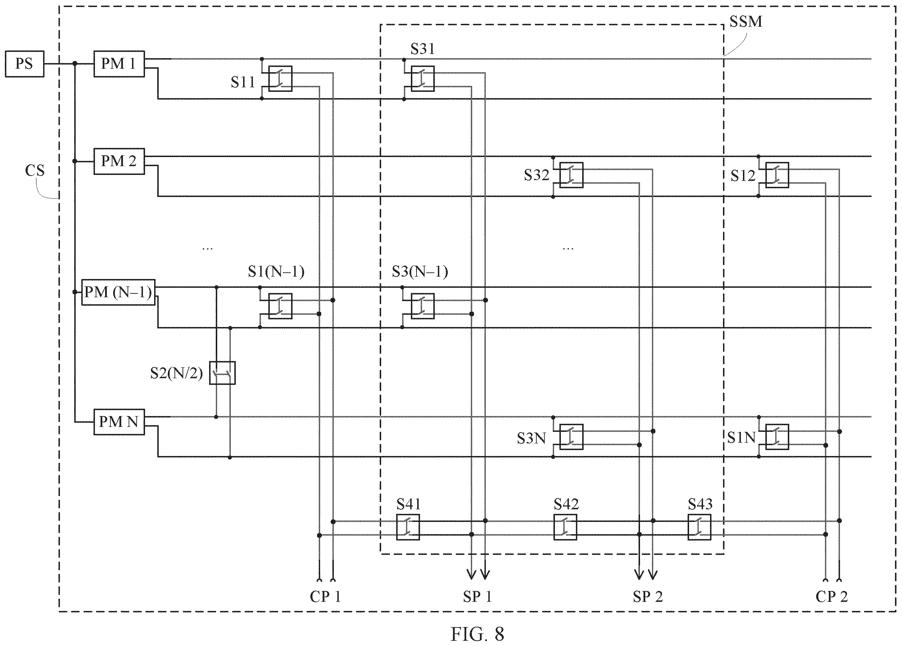

In another possible implementation, an embodiment of this application may provide a charging system CS based on FIG. 5, as shown in FIG. 8. Referring to FIG. 8, the charging system CS may not include some second switching switches (such as a second switching switch S21 between a power module PM 1 and a power module PM 2 in FIG. 5 may not be included, and a second switching switch S2 (N/2) between a power module PM (N-1) and a power module PM N is reserved).

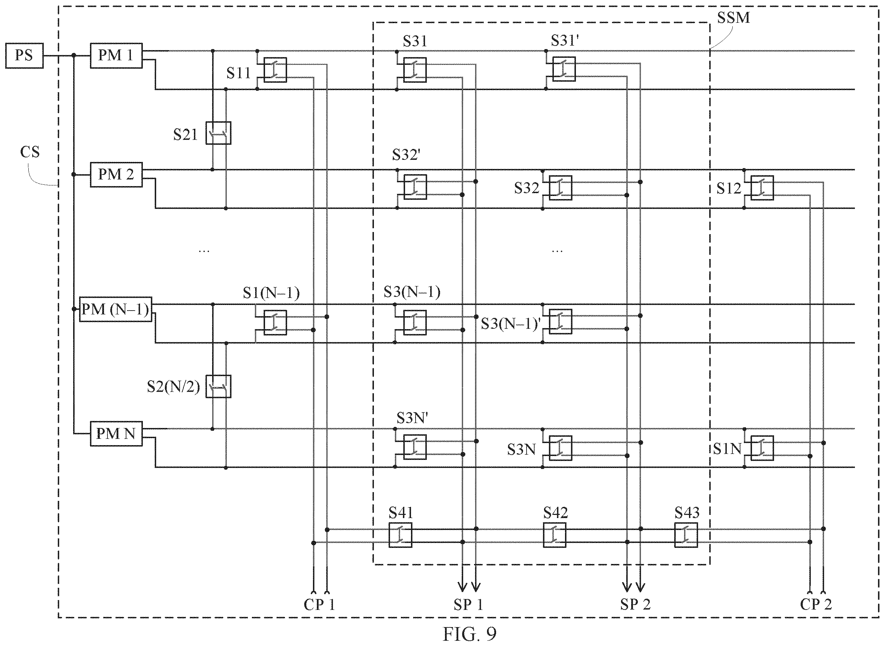

In still another possible implementation, an embodiment of this application may provide a charging system CS based on FIG. 5, as shown in FIG. 9. As shown in FIG. 9, a distributing switch module DSM may include more third switching switches (for example, a third switching switch S31', a third switching switch S32', ..., a third switching switch S3(N-1)', and a third switching switch S3N' in FIG. 9) than those in FIG. 5.

It can be learned from FIG. 9 that N power modules PMs may be connected to corresponding sharing ports through corresponding third switching switches.

For example, a power module PM 1 may be connected to a sharing port SP 1 through a third switching switch S31. In addition, the power module PM 1 may also be connected to a sharing port SP 2 through the third switching switch S31'.

For another example, a power module PM 2 may be connected to the sharing port SP 1 through the third switching switch S32'. In addition, the power module PM 2 may also be connected to the sharing port SP 2 through a third switching switch S32.

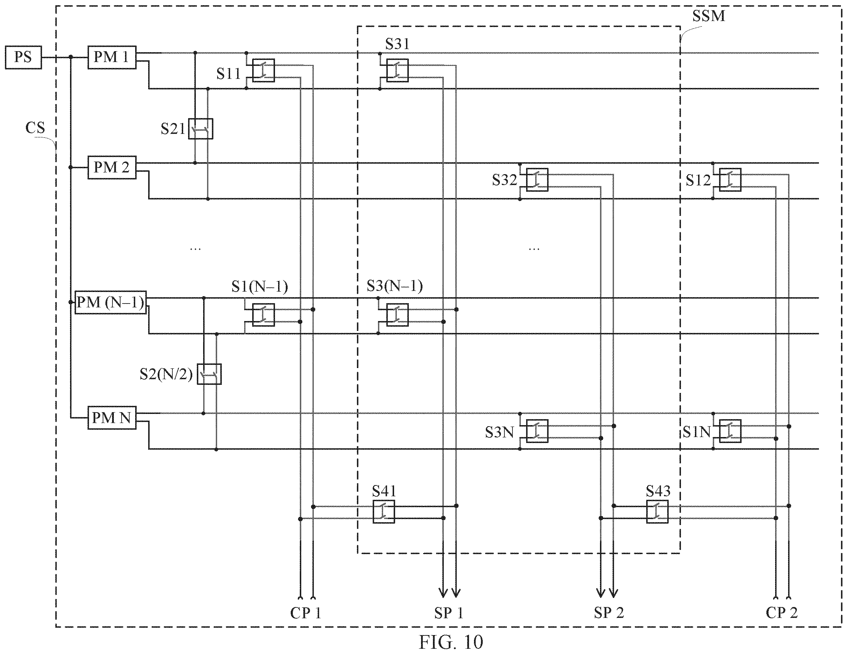

In yet another possible implementation, an embodiment of this application may provide a charging system CS based on FIG. 5, as shown in FIG. 10. As shown in FIG. 10, a sharing switch module SSM may not include some fourth switching switches (such as a fourth switching switch S42 between a sharing port SP 1 and a sharing port SP 2 in FIG. 5 is not included).

It can be learned from FIG. 10 that a fourth switching switch S41 connects a charging port CP 1 to the sharing port SP 1, and a fourth switching switch S43 connects a charging port CP 2 to the sharing port SP 2.

Therefore, the charging port CP 1 may be connected to the sharing port SP 1 through the fourth switching switch S41, and the charging port CP 2 may be connected to the sharing port SP 2 through the fourth switching switch S43. In other words, in this embodiment of this application, the charging port CP 1, the charging port CP 2, the sharing port SP 1, and the sharing port SP 2 may be interconnected through the fourth switching switch S41 and the fourth switching switch S43.

It can be learned from FIG. 10 and the foregoing connection relationship that, a second power P₂ output by each of N power modules may be shared between the charging port CP 1 and the sharing port SP 1 through the fourth switching switch S41, and the second power P₂ output by each of the N power modules may be shared between the charging port CP 2 and the sharing port SP 2 through the fourth switching switch S43.

It should be noted that FIG. 7 to FIG. 10 are merely diagrams of structures of some charging systems according to embodiments of this application. Certainly, the technical solutions in embodiments of this application may be further applied to a charging system of another structure, and all similar structures fall within the protection scope of embodiments of this application.

The following describes a charging system provided in an embodiment of this application by using an example in which the charging system CS includes four (namely, N described above is 4) power modules.

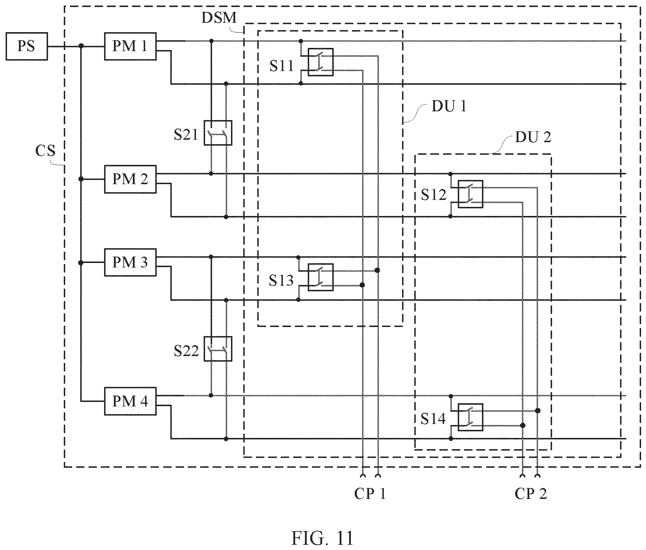

In a possible implementation, referring to FIG. 11, the charging system CS may include four power modules (namely, a power module PM 1, a power module PM 2, a power module PM 3, and a power module PM 4 in FIG. 11), a distributing switch module DSM, and a plurality of charging ports (namely, a charging port CP 1 and a charging port CP 2 in FIG. 11). The power module PM 1 and the power module PM 3 belong to a first part of power modules, and the power module PM 2 and the power module PM 4 belong to a second part of power modules.

Further, the distributing switch module DSM may include a distributing unit DU 1 and a distributing unit DU 2. The distributing unit DU 1 may include a first switching switch S11 and a first switching switch S13. The distributing unit DU 2 may include a first switching switch S12 and a first switching switch S14.

Optionally, each of input ends of the power module PM 1, the power module PM 2, the power module PM 3, and the power module PM 4 is connected to an external power supply PS, an output end of the power module PM 1 is connected to the charging port CP 1 through the first switching switch S11, and an output end of the power module PM 3 is connected to the charging port CP 1 through the first switching switch S13. Similarly, an output end of the power module PM 2 is connected to the charging port CP 2 through the first switching switch S12, and an output end of the power module PM 4 is connected to the charging port CP 2 through the first switching switch S14. Further, the charging port CP 1 is connected to an electric vehicle EV 1 to charge the electric vehicle EV 1, and the charging port CP 2 is connected to an electric vehicle EV 2 to charge the electric vehicle EV 2.

It can be learned from the foregoing connection relationship that the distributing unit DU 1 corresponds to the first part of power modules and the charging port CP 1, and the distributing unit DU 2 corresponds to the second part of power modules and the charging port CP 2.

Based on the structure shown in FIG. 11, the power module PM 1, the power module PM 2, the power module PM 3, and the power module PM 4 each may convert a first power P₁ from the external power supply PS and output a second power P₂. The distributing unit DU 1 may distribute a second power P₂ output by each of the power module PM 1 and the power module PM 3 to the charging port CP 1. Similar to the distributing unit DU 1, the distributing unit DU 2 may distribute a second power P2 output by each of the power module PM 2 and the power module PM 4 to the charging port CP 2.

In other words, the first switching switch S11 may distribute the second power P₂ output by the power module PM 1 to the charging port CP 1, and the first switching switch S13 may also distribute the second power P₂ output by the power module PM 3 to the charging port CP 1. The first switching switch S12 may distribute the second power P₂ output by the power module PM 2 to the charging port CP 2, and the first switching switch S14 may also distribute the second power P₂ output by the power module PM 4 to the charging port CP 2.

Then, the charging port CP 1 may charge the electric vehicle EV 1 based on the power distributed by the distributing unit DU 1. Similarly, the charging port CP 2 may charge the electric vehicle EV 2 based on the power distributed by the distributing unit DU 2.

In the charging system provided in this embodiment of this application, the distributing unit DU 1 and the distributing unit DU 2 distribute, to the charging port CP 1 and the charging port CP 2, a power (namely, the second power P₂) output by each power module in the first part of power modules and the second part of power modules. In this way, the electric vehicle EV 1 and the second electric vehicle EV 2 can be simultaneously charged through the different charging ports, and an output power of the charging system can meet charging requirements for different electric vehicles. This improves a charging speed of the electric vehicle and utilization of a power module in the charging system.

Further, still referring to FIG. 11, in addition to the four first switching switches (namely, the first switching switch S11, the first switching switch S12, the first switching switch S13, and the first switching switch S14 in FIG. 11), the distributing switch module DSM may further include two second switching switches (namely, a second switching switch S21 and a first switching switch S22 in FIG. 11).

It can be learned from FIG. 11 that the second switching switch S21 may connect the power module PM 1 and the power module PM 2 (the power module PM 1 and the power module PM 2 are adjacent power modules), and the second switching switch S22 may connect the power module PM 3 and the power module PM 4 (the power module PM 3 and the power module PM 4 are adjacent power modules). In other words, two adjacent power modules in the four power modules may be interconnected through two second switching switches in this embodiment of this application.

For example, the power module PM 1 and the power module PM 2 may be interconnected through the second switching switch S21, so that the second power P₂ from the power module PM 2 may be distributed to the charging port CP 1 through the second switching switch S21 and the first switching switch S11, and the second power P₂ from the power module PM 1 may be distributed to the charging port CP 2 through the second switching switch S21 and the first switching switch S12.

For another example, the power module PM 3 and the power module PM 4 may be interconnected through the second switching switch S22, so that the second power P₂ from the power module PM 4 may be distributed to the charging port CP 1 through the second switching switch S22 and the first switching switch S13, and the second power P₂ from the power module PM 3 may be distributed to the charging port CP 2 through the second switching switch S21 and the first switching switch S14.

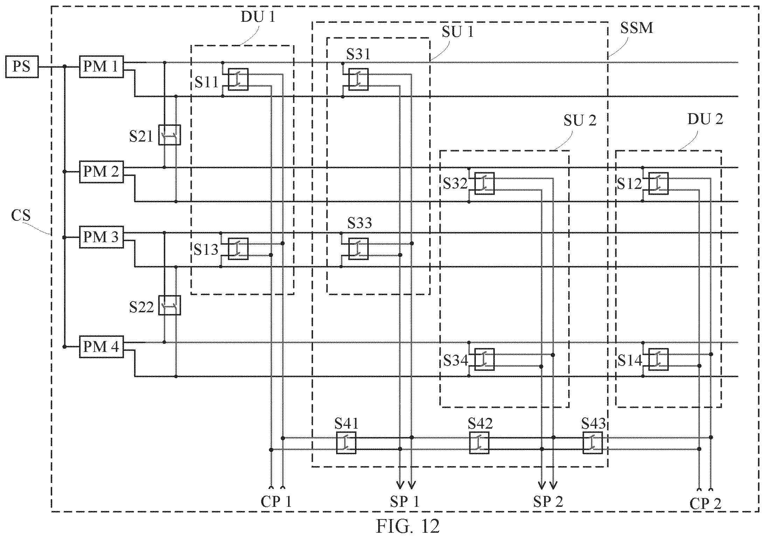

In a possible implementation, based on FIG. 11, the charging system CS provided in this embodiment of this application may further include a sharing switch module SSM and two sharing ports (namely, a sharing port SP 1 and a sharing port SP 2 in FIG. 12), as shown in FIG. 12.

Further, the sharing switch module SSM may include a sharing unit SU 1 and a sharing unit SU 2. The sharing unit SU 1 may include a third switching switch S31 and a third switching switch S33. The sharing unit SU 2 may include a third switching switch S32 and a third switching switch S34.

It can be learned from FIG. 12 that the third switching switch S31 may connect the power module PM 1 to the sharing port SP 1. The third switching switch S32 may connect the power module PM 2 to the sharing port SP 2. The third switching switch S33 may connect the power module PM 3 to the sharing port SP 1. The third switching switch S34 may connect the power module PM 4 to the sharing port SP 2.

Based on FIG. 12 and the foregoing connection relationship, in this embodiment of this application, power from the four power modules may be shared with the sharing port SP 1 and the sharing port SP 2 through the sharing switch module SSM.

For example, the second power P₂ output by the power module PM 1 may be shared with the sharing port SP 1 through the third switching switch S31.

For another example, the second power P₂ output by the power module PM 2 may be shared with the sharing port SP 2 through the third switching switch S32.

For still another example, the second power P₂ output by the power module PM 3 may be shared with the sharing port SP 1 through the third switching switch S33.

For yet another example, the second power P₂ output by the power module PM 4 may be shared with the sharing port SP 2 through the third switching switch S34.

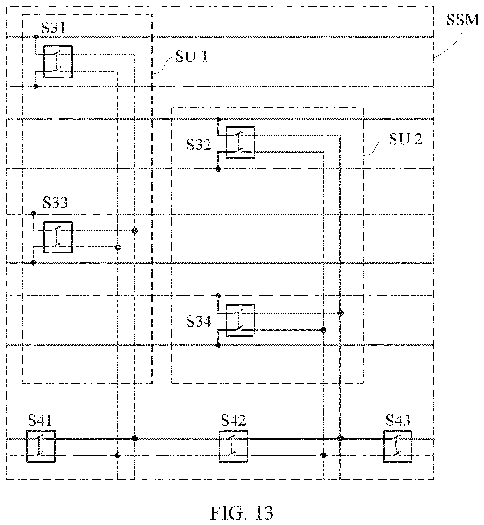

Further, referring to FIG. 12 and FIG. 13, in addition to the four third switching switches (namely, the third switching switch S31, the third switching switch S32, the third switching switch S33, and the third switching switch S34 in FIG. 12 and FIG. 13) in the sharing unit SU 1 and the sharing unit SU 2, the foregoing sharing switch module SSM may further include three fourth switching switches (namely, a fourth switching switch S41, a fourth switching switch S42, and a fourth switching switch S43 in FIG. 12 and FIG. 13).

It can be learned from FIG. 12 that, the fourth switching switch S41 connects the charging port CP 1 to the sharing port SP 1, the fourth switching switch S42 connects the sharing port SP 1 to the sharing port SP 2, and the fourth switching switch S43 connects the charging port CP 2 to the sharing port SP 2.

Therefore, the four third switching switches may connect the four power modules to the sharing port SP 1 and the sharing port SP 2, and the three fourth switching switches may connect the charging port CP 1, the charging port CP 2, the sharing port SP 1, and the sharing port SP 2. In other words, the four power modules may be connected to the sharing port SP 1 and the sharing port SP 2 through the four third switching switches in this embodiment of this application. In addition, the charging port CP 1, the charging port CP 2, the sharing port SP 1, and the sharing port SP 2 may be further connected through the fourth switching switch S41, the fourth switching switch S42, and the fourth switching switch S43 in this embodiment of this application.

With reference to FIG. 12 and the foregoing connection relationship, it can be learned that the second power P₂ output by each of the four power modules may be shared with a corresponding sharing port through a corresponding third switching switch. In addition, a power (namely, a power transmitted to a next charging system through the sharing port) transmitted at the sharing port may be controlled by setting the third switching switch. It can be further learned that an output power of any of the four power modules may be distributed to any charging port or any sharing port through the plurality of fourth switching switches.

In this embodiment of this application, an output power of any power module may be distributed to any charging port and any sharing port through the distributing switch module and the sharing switch module. This not only improves a charging power of a single charging port and utilization of a single power module, but also enables, through the sharing switch module, the charging system to have a capability of sharing the power to the external. Therefore, flexibility of the charging system is greatly improved.

The following describes a charging system provided in an embodiment of this application by using an example in which the charging system CS includes an odd quantity (represented by N+1) of power modules.

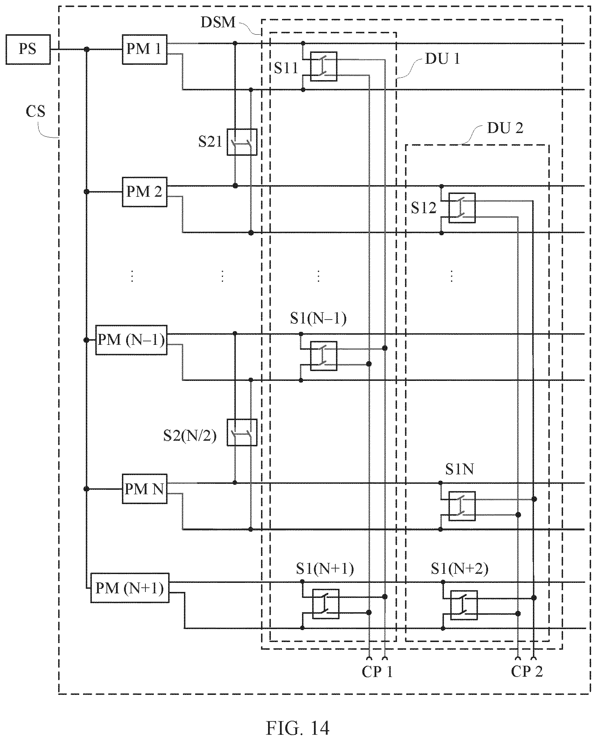

In a possible implementation, referring to FIG. 14, the foregoing distributing switch module DSM may include a distributing unit DU 1 and a distributing unit DU 2. The distributing unit DU 1 may include a first switching switch S11, a first switching switch S13 (namely, a first switching switch that is connected to a power module PM 3 (not shown in FIG. 14), and not shown in FIG. 14, ..., a first switching switch S1(N-1), and a first switching switch S1(N+1). The distributing unit DU 2 may include a first switching switch S12, a first switching switch S14 (namely, a first switching switch that is connected to a power module PM 4 (not shown in FIG. 14), and not shown in FIG. 14, ..., a first switching switch S1N, and a first switching switch S1(N+2). It can be seen learned from FIG. 14 that the distributing switch module DSM may include (N+2) first switching switches, namely, the first switching switch S 11, the first switching switch S12, ..., the first switching switch S1(N-1), the first switching switch S1N, the first switching switch S1(N+1), and the first switching switch S1(N+2).

It should be noted that, for a connection relationship between N first switching switches (namely, the first switching switch S11, the first switching switch S12, ..., the first switching switch S1(N-1), and the first switching switch S1N) and corresponding power modules, and a power allocation process, refer to the foregoing descriptions. Details are not described herein again in this embodiment of this application.

The first switching switch S1(N+1) may connect a power module PM (N+1) to a charging port CP 1, and the first switching switch S1(N+2) may connect the power module PM (N+1) to a charging port CP 2.

Referring to FIG. 14, the first switching switch S1(N+1) may distribute, to the charging port CP 1, a second power P₂ output by the power module PM (N+1), and the first switching switch S1(N+2) may distribute, to the charging port CP 2, the second power P₂ output by the power module PM (N+1).

It may be understood that the (N+2) first switching switches may connect (N+1) power modules (namely, the power module PM 1, the power module PM 2, ..., a power module PM (N-1), a power module PM N, and the power module PM (N+1)) in FIG. 14 to a plurality of charging ports (namely, the charging port CP 1 and the charging port CP 2 in FIG. 14). In other words, the (N+1) power modules may be connected to the charging port CP 1 and the charging port CP 2 through the (N+2) first switching switches in this embodiment of this application.

Further, still referring to FIG. 14, in addition to the (N+2) first switching switches, the distributing switch module DSM may further include N/2 second switching switches (namely, a second switching switches S21, ..., and a second switching switches S2(N/2) in FIG. 14).

It can be learned from FIG. 14 that the N/2 second switching switches each may connect two adjacent power modules in the (N+1) power modules in FIG. 14. In other words, in this embodiment of this application, two adjacent power modules in the (N+1) power modules may be interconnected through the N/2 second switching switches.

For example, the power module PM 1 and the power module PM 2 may be interconnected through the second switching switch S21. Therefore, a second power P₂ output by the power module PM 2 may be distributed to the charging port CP 1 through the second switching switch S21 and the first switching switch S11, or a second power P₂ output by the power module PM 1 may be distributed to the charging port CP 2 through the second switching switch S21 and the first switching switch S12.

For another example, the power module PM 3 and the power module PM 4 may be interconnected through a second switching switch S22 (namely, a second switching switch that is connected between the power module PM 3 (not shown in FIG. 2) and the power module PM 4 (not shown in FIG. 2), and not shown in FIG. 2). Therefore, a second power P₂ output by the power module PM 4 may be distributed to the charging port CP 1 through the second switching switch S22 and the first switching switch S13 (namely, a first switching switch that is connected to the power module PM 3, and not shown in FIG. 2), or a second power P₂ output by the power module PM 3 may be distributed to the charging port CP 2 through the second switching switch S22 and the first switching switch S14 (namely, a first switching switch connected to the power module PM 4).

For still another example, the power module PM N and the power module PM (N-1) may be interconnected through the second switching switch S2(N/2). Therefore, a second power P₂ output by the power module PM N may be distributed to the charging port CP 1 through the second switching switch S2(N/2) and the first switching switch S1(N-1), and a second power P₂ output by the power module PM (N-1) may be distributed to the charging port CP 2 through the second switching switch S2(N/2) and the first switching switch S1N.

It should be noted that the power module PM (N+1) does not need to be connected to the second switching switch.

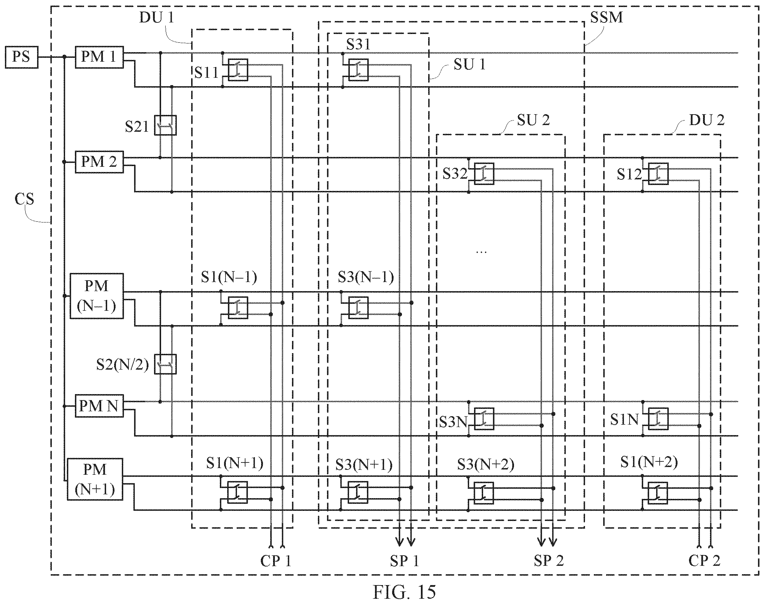

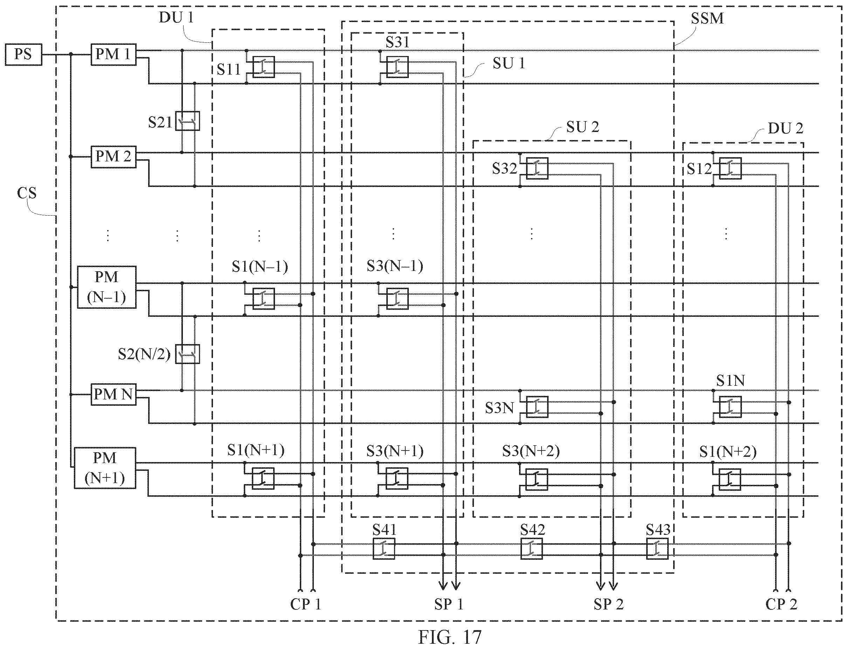

In a possible implementation, based on FIG. 14, the charging system CS provided in this embodiment of this application may further include a sharing switch module SSM and a plurality of sharing ports (two sharing ports (namely, a sharing port SP 1 and a sharing port SP 2 in FIG. 15 and FIG. 17) are used as an example in this embodiment of this application), as shown in FIG. 15 and FIG. 17.

Further, the sharing switch module SSM may include a sharing unit SU 1 (namely, a first sharing unit) and a sharing unit SU 2 (namely, a second sharing unit), as shown in FIG. 15 to FIG. 18. The sharing unit SU 1 may include a third switching switch S31, a third switching switch S33 (namely, a third switching switch that is connected to the power module PM 3 (not shown in FIG. 15 and FIG. 17), and not shown in FIG. 15 to FIG. 18, ..., a third switching switch S3(N-1), and a third switching switch S3(N+1). The sharing unit SU 2 may include a third switching switch S32, a third switching switch S34 (namely, a third switching switch that is connected to the power module PM 4 (not shown in FIG. 15 and FIG. 17), and not shown in FIG. 15 to FIG. 18, ..., a third switching switch S3N, and a third switching switch S3(N+2).

Therefore, the third switching switch in the sharing unit SU 1 may connect the power module PM 1, the power module PM 3, ..., the power module PM (N-1), and the power module PM (N+1) to the sharing port SP 1, and the third switching switch in the sharing unit SU 2 may connect the power module PM 2, the power module PM 4, ..., the power module PM N, and the power module PM (N+1) to the sharing port SP 2. In other words, the (N+1) power modules may be connected to the sharing port SP 1 and the sharing port SP 2 through the sharing unit SU 1 and the sharing unit SU 2 in the sharing switch module SSM in this embodiment of this application.

It may be understood that the sharing switch module SSM may connect the (N+1) power modules to the sharing port SP 1 and the sharing port SP 2. In other words, the (N+1) power modules may be connected to the sharing port SP 1 and the sharing port SP 2 through the sharing switch module SSM in this embodiment of this application.

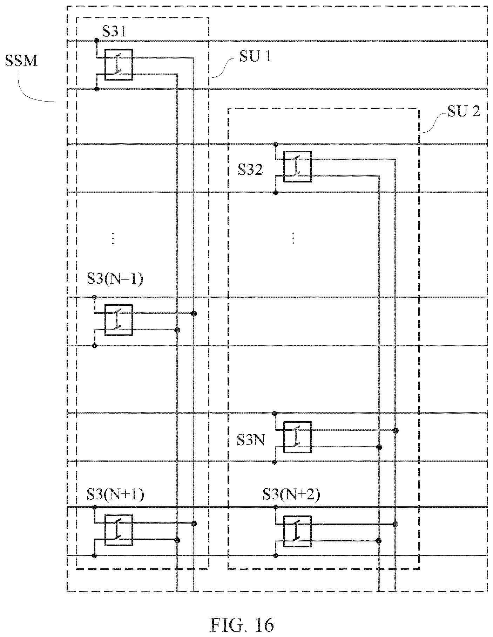

Referring to FIG. 15 and FIG. 16, the sharing switch module SSM may include (N+2) third switching switches (namely, the third switching switch S31, the third switching switch S32, ..., the third switching switch S3(N-1), the third switching switch S3N, the third switching switch S3(N+1), and the third switching switch S3(N+2) in FIG. 15 and FIG. 16) in the sharing unit SU 1 and the sharing unit SU 2.

It can be learned from FIG. 15 that the (N+2) third switching switches may connect the (N+1) power modules to the sharing port SP 1 and the sharing port SP 2. In other words, in this embodiment of this application, the N power modules may be connected to the sharing port SP 1 and the sharing port SP 2 through N third switching switches.

For example, the third switching switch S3(N+1) may connect the power module PM (N+1) to the sharing port SP 1, so that the third switching switch S3(N+1) may distribute the second power P₂ output by the power module PM (N+1) to the sharing port SP 1.

For another example, the third switching switch S3(N+2) may connect the power module PM (N+1) to the sharing port SP 2, so that the third switching switch S3(N+2) may distribute the second power P₂ output by the power module PM (N+1) to the sharing port SP 2.

With reference to FIG. 15 and the foregoing connection relationship, it can be learned that a second power P₂ output by each of the (N+1) power modules may be shared with a corresponding sharing port through a corresponding third switching switch. In addition, a power (namely, a power transmitted to a next charging system through the sharing port) transmitted at the sharing port may be controlled by controlling an action of the third switching switch.

It should be noted that, for a connection relationship between the N first switching switches (namely, the first switching switch S11, the first switching switch S12, ..., the first switching switch S1(N-1), and the first switching switch S1N) and corresponding power modules, a connection relationship between the N/2 second switching switches (namely, the second switching switch S21, ..., and the second switching switch S2(N/2)) and corresponding power modules, and a connection relationship between the N third switching switches (namely, the third switching switch S31, the third switching switch S32, ..., and the third switching switch S3N) and corresponding power modules PMs, and power allocation processes, refer to the foregoing descriptions. Details are not described herein again in this embodiment of this application.

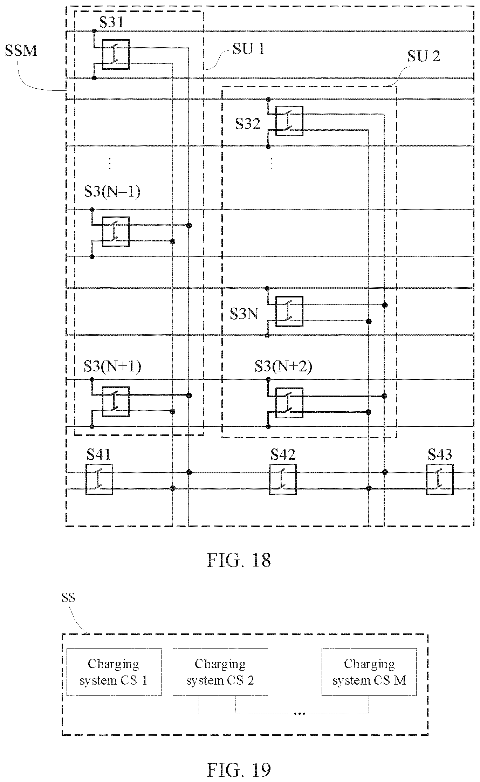

On the basis of FIG. 15 and FIG. 16, in addition to the (N+2) third switching switches (namely, the third switching switch S31, the third switching switch S32, ..., the third switching switch S3(N-1), the third switching switch S3N, the third switching switch S3(N+1), and the third switching switch S3(N+2) in FIG. 17 and FIG. 18), the foregoing sharing switch module SSM may further include a plurality of fourth switching switches (namely, the fourth switching switch S41, the fourth switching switch S42, and the fourth switching switch S43 in FIG. 5 and FIG. 6), as shown in FIG. 17 and FIG. 18.

It can be learned from FIG. 17 that, the third switching switch in the sharing unit SU 1 may connect the power module PM 1, the power module PM 3, ..., the power module PM (N-1), and the power module PM (N+1) to the sharing port SP 1; the third switching switch in the sharing unit SU 2 may connect the power module PM 2, the power module PM 4, ..., the power module PM N, and the power module PM (N+1) to the sharing port SP 2; and the fourth switching switch S41, the fourth switching switch S42, the fourth switching switch S43 may connect the charging port CP 1, the charging port CP 2, the sharing port SP 1, and the sharing port SP 2. In other words, the (N+1) power modules may be connected to the sharing port SP 1 and the sharing port SP 2 through the (N+2) third switching switches in this embodiment of this application. In addition, the charging port CP 1, the charging port CP 2, the sharing port SP 1, and the sharing port SP 2 may be interconnected through the fourth switching switch S41, the fourth switching switch S42, and the fourth switching switch S43 in this embodiment of this application.

It can be learned from FIG. 17 and the foregoing connection relationship that, the second power P₂ output by each of the (N+1) power modules may be shared among the charging port CP 1, the charging port CP 2, the sharing port SP 1, and the sharing port SP 2 through the plurality of third switching switches and the plurality of fourth switching switches, and a power transmitted at the sharing port may be controlled.

In this embodiment of this application, an output power of any power module may be distributed to any charging port and any sharing port through the distributing switch module DSM and the sharing switch module SSM. This not only improves a charging power of a single charging port and utilization of a single power module, but also enables, through the sharing switch module SSM, the charging system to have a capability of sharing the power to the external. Therefore, flexibility of the charging system is greatly improved.

It should be noted that FIG. 7 to FIG. 10 are merely diagrams of structures of some charging systems according to embodiments of this application. Certainly, the technical solutions in embodiments of this application may be further applied to a charging system of another structure, and all similar structures fall within the protection scope of embodiments of this application.

In a possible implementation, the first switching switch, the second switching switch, the third switching switch, and the fourth switching switch may be contactors, semiconductor switches (which may also be referred to as solid-state switches), semiconductor hybrid switches (which may be referred to as hybrid switches for short), or the like.

Further, the foregoing contactor may be a single-contact contactor (also referred to as a single-pole contactor), or may be a dual-contact contactor (also referred to as a double-pole contactor). Certainly, the contactor may alternatively be another type of contactor. This is not limited in this embodiment of this application.

In a possible implementation, an embodiment of this application provides a sharing system (sharing system, SS), as shown in FIG. 19. The sharing system SS may include M (M is greater than or equal to 2, that is, at least two) parallel charging systems (namely, a charging system CS 1, a charging system CS 2, ..., and a charging system CS M in FIG. 19).

According to the sharing system provided in this embodiment of this application, different electric vehicles can be simultaneously charged through charging ports of different charging systems, and a power can be shared between the different charging systems. An output power (namely, a charging power provided by the charging system for the electric vehicle through the charging port) of the charging system can be greatly increased through power sharing. In other words, power sharing does not affect simultaneous charging of different electric vehicles by the sharing system, thereby improving a charging speed of the electric vehicle and utilization of a power module in the charging system.

In addition, all charging systems in the sharing system provided in this embodiment of this application are independent modules. It can be found that a degree of modularization of the sharing system is high, and a quantity of charging systems may be selected based on an actual charging requirement for the electric vehicle, which is flexible.

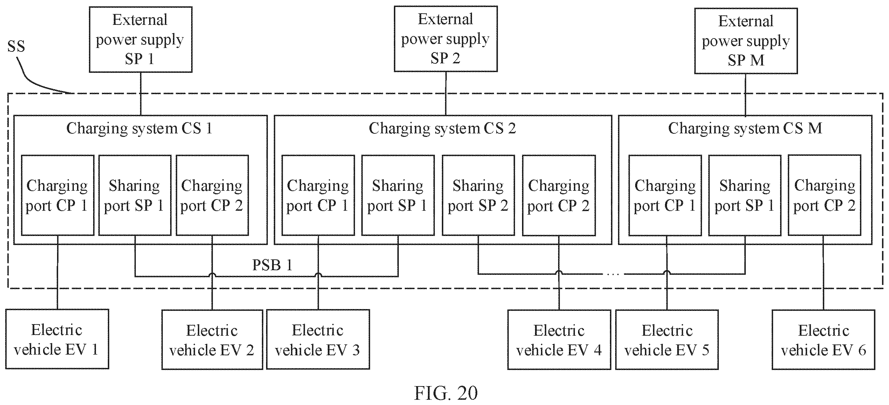

In a possible implementation, as shown in FIG. 20, adjacent charging systems may be connected through a power sharing bus (which may also be referred to as a connecting conductor).

For example, the charging system CS 1 (which may be a sharing port SP 1 of the charging system CS 1) and the charging system CS 2 (which may be a sharing port SP 1 of the charging system CS 1) are connected through a power sharing bus (power sharing bus, PSB) 1.

It may be understood that the sharing port SP 1 of the charging system CS 1 may be considered as a sharing output port of the charging system CS 1. Because the charging system CS 1 is the first charging system of the sharing system SS, only one sharing port (used as the sharing output port of the charging system CS 1) may be provided for the charging system CS 1.

It may be further understood that because an intermediate charging system (namely, a charging system other than the charging system CS 1 and the charging system CS M in the sharing system SS, for example, the charging system CS 2), needs to be connected to an adjacent charging system, two sharing ports, that is, a sharing port SP 1 and a sharing port SP 2 may be provided in the intermediate charging system such as the charging system CS 2. Herein, if a power is transmitted from the charging system CS 1 to the intermediate charging system such as the charging system CS 2, the sharing port SP 1 of the intermediate charging system such as the charging system CS 2 may be considered as a sharing input port, and the sharing port SP 2 of the intermediate charging system such as the charging system CS 2 may be considered as a sharing output port.

Certainly, because power transmission is bidirectional, if the power is transmitted from the intermediate charging system such as the charging system CS 2 to the charging system CS 1, the sharing port SP 1 of the intermediate charging system such as the charging system CS 2 may be considered as a sharing output port, and the sharing port SP 2 of the intermediate charging system such as the charging system CS 2 may be considered as a sharing input port of the intermediate charging system such as the charging system CS 2 (herein, it may be case that the intermediate charging system such as the charging system CS 3 transmits the power to the charging system CS 2).

Similar to the charging system CS 1, the charging system CS M is the last charging system of the sharing system SS. Therefore, only one sharing port (used as a sharing input port of the charging system CS M) may be provided in the charging system CS M.

Certainly, if power sharing needs to be further implemented based on the M charging systems in the sharing system, or to implement batch production of charging systems, the sharing port SP 2 (not shown in FIG. 20, namely, the sharing input port of the charging system CS 1) may be provided for the charging system CS 1, or the sharing port SP 2 (not shown in FIG. 20, namely, a sharing output port of the charging system CS M) may be provided for the charging system CS M. In other words, a quantity of sharing ports provided for the charging system is not limited in this embodiment of this application.

It can be learned from FIG. 20 that in this embodiment of this application, different electric vehicles may be simultaneously charged through different charging systems.

For example, different electric vehicles (for example, an electric vehicle EV 1 and an electric vehicle EV 2) may be charged through different charging ports (for example, a charging port CP 1 and a charging port CP 2 of the charging system CS 1) of the charging system CS 1.

For another example, different electric vehicles (for example, an electric vehicle EV 3 and an electric vehicle EV 4) are charged through different charging ports (for example, a charging port CP 1 and a charging port CP 2 of the charging system CS 2) of the charging system CS 2.

For still another example, different electric vehicles (for example, an electric vehicle EV 5 and an electric vehicle EV 6) are charged through different charging ports (for example, a charging port CP 1 and a charging port CP 2 of the charging system CS M) of the charging system CS M.

With reference to FIG. 7, it may be understood that more charging ports (in other words, there may be more than two charging ports: a charging port CP 1 and a charging port CP 2) may be provided in each charging system in the sharing system shown in FIG. 20.

For example, a charging port CP 3 (not shown in FIG. 20) and a charging port CP 4 (not shown in FIG. 20) may be further provided in the charging system CS 1. When sharing is performed between different charging systems, a plurality of electric vehicles are charged through a plurality of charging ports.

It can be further learned from FIG. 20 that, to improve reliability of the sharing system, each charging system (which may be considered as a power module in the charging system) in the sharing system provided in this embodiment of this application may be supplied with power through different external power supplies.

For example, the charging system CS 1 is supplied with power through an external power supply SP 1.

For another example, the charging system CS 2 is supplied with power through an external power supply SP 2.

For still another example, the charging system CS M is supplied with power through an external power supply SP M.

Certainly, in this embodiment of this application, all the charging systems in the sharing system may be supplied with power through a same external power supply, or a plurality of (for example, two or three) charging systems may be supplied with power through one external power supply (namely, one external power supply supplies power to some of the charging systems). A manner of supply power to the charging system in the sharing system is not limited in this embodiment of this application.

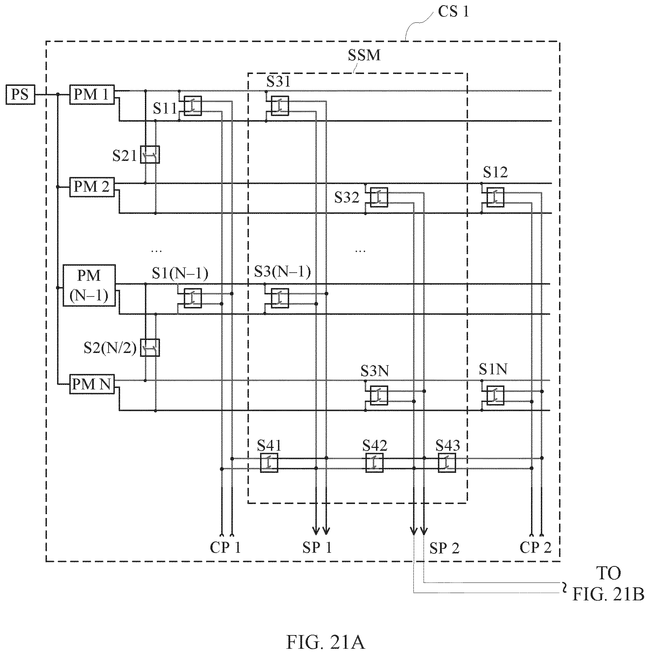

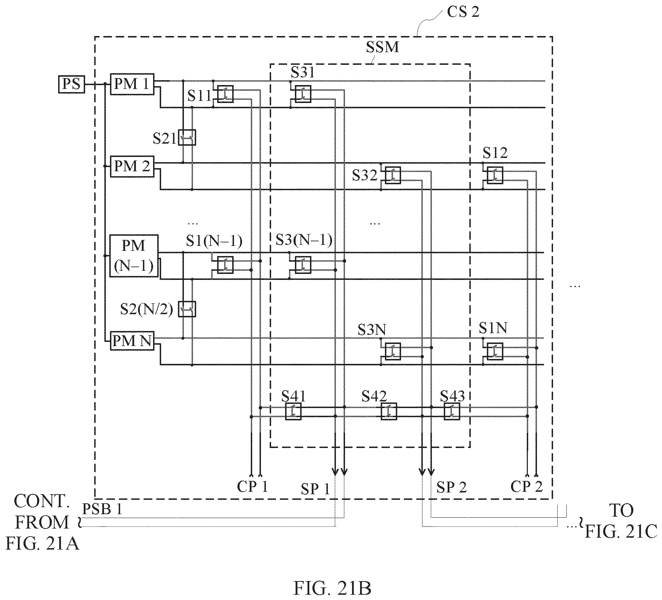

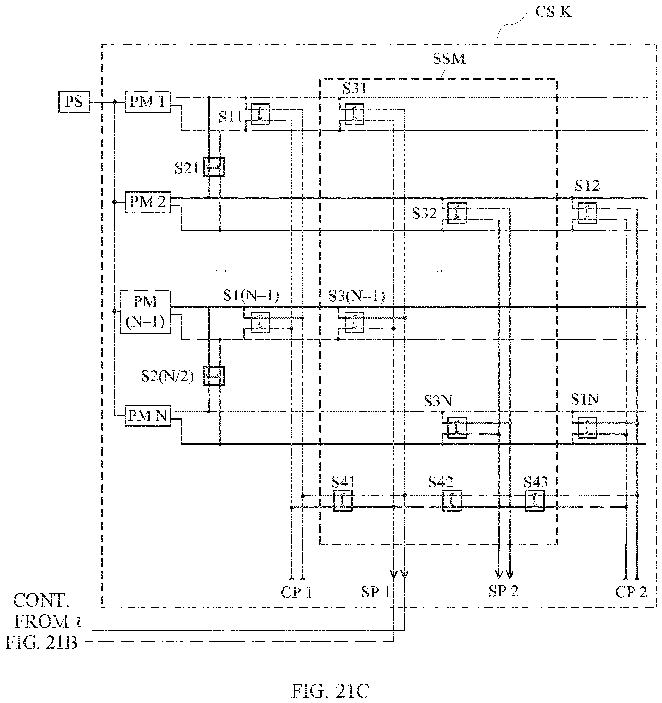

In an example, as shown in FIG. 21A, FIG. 21B, and FIG. 21C, the sharing system may include K parallel charging systems (namely, a charging system CS 1, a charging system CS 2, ..., and a charging system CS K in FIG. 21A, FIG. 21B, and FIG. 21C, where each charging system includes N (namely, an even quantity of) power modules). Two adjacent charging systems are connected through a power sharing bus. For example, the charging system CS 1 and the charging system CS 2 are connected through a power sharing bus PSB 1.

It can be learned from FIG. 21A that the charging system CS 1 may charge different electric vehicles through a charging port CP 1 and a charging port CP 2 of the charging system CS 1, and may share a power with the charging system CS 2 through a sharing port SP 2 of the charging system CS 1.

Similar to the charging system CS 1, the charging system CS 2 may receive, through a sharing port SP 1 of the charging system CS 2, the power of the charging system CS 1 shared by the charging system CS 1, and charge different electric vehicles through a charging port CP 1 and a charging port CP 2 of the charging system CS 2. In addition, the power of the charging system CS 1 may be shared with the charging system CS 2 through three fourth switching switches of the charging system CS 2, or the power of the charging system CS 1 may be shared with a charging system CS (for example, a charging system CS 3, which is not shown in FIG. 21A, FIG. 21B, and FIG. 21C) after the charging system CS 2 through a sharing port SP 1 and a sharing port SP 2 of the charging system CS 2 and one of the fourth switching switches.

It should be noted that the foregoing process in which the power of the charging system CS 1 can be shared with the charging system CS 2 through the three fourth switching switches of the charging system CS 2 does not affect use of a charging port inside the charging system CS 2, that is, does not affect charging of an electric vehicle by the charging system CS 2 through the charging port CP 1 and the charging port CP 2 of the charging system CS 2.

It should be further noted that in the foregoing process in which the power of the charging system CS 1 is shared with the charging system CS after the charging system CS 2 through the sharing port SP 2 of the charging system CS 2, the three fourth switching switches of the charging system CS 2 provide a power transmission channel for sharing the power of the charging system CS 1 with the charging system CS after the charging system CS 2. This process does not affect use of the charging port inside the charging system CS 2.

It should be noted that, because power has a bidirectional transmission characteristic, as described above, the charging system CS 1 may share the power of the charging system CS 1 with the charging system CS 2, and the charging system CS 2 may further share a power of the charging system CS 2 with a next charging system CS. Certainly, the charging system CS 2 may further share the power of the charging system CS 2 with the charging system CS 1.

It should be further noted that a principle of power sharing between other charging systems CS (for example, a charging system CS K and a charging system CS (K-1) (the charging system CS (K-1) is not shown in FIG. 21A, FIG. 21B, and FIG. 21C)) in the sharing system provided in FIG. 21A, FIG. 21B, and FIG. 21C is the same as that described above. Details are not described herein again in this embodiment of this application.

In another example, the sharing system provided in this embodiment of this application is described in detail with reference to the four charging systems CSs (each charging system CS includes four power modules PMs) shown in FIG. 12.

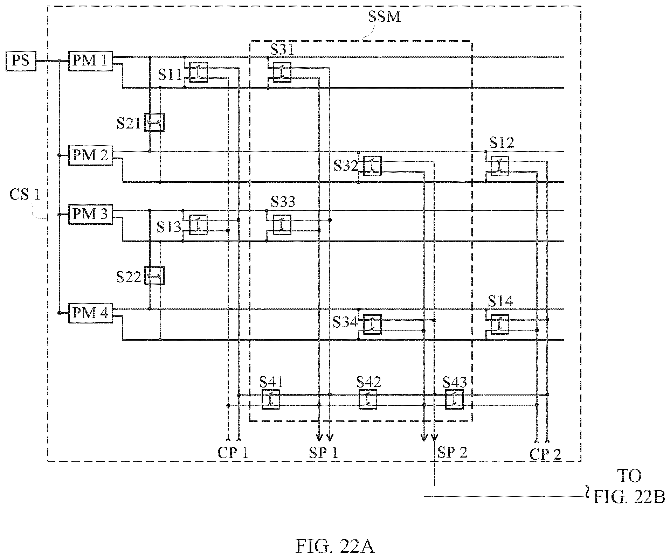

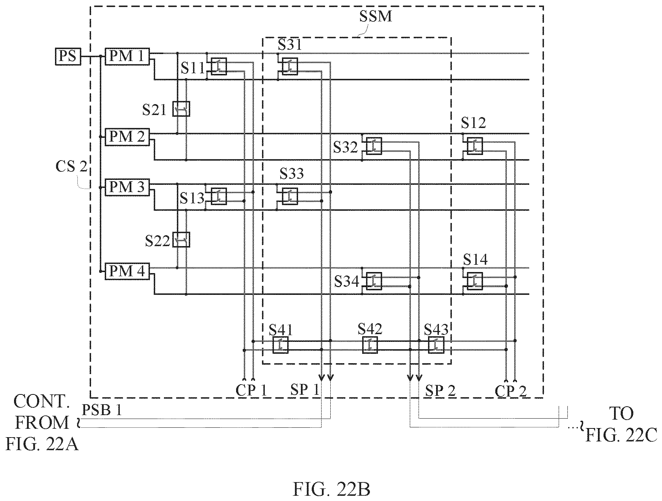

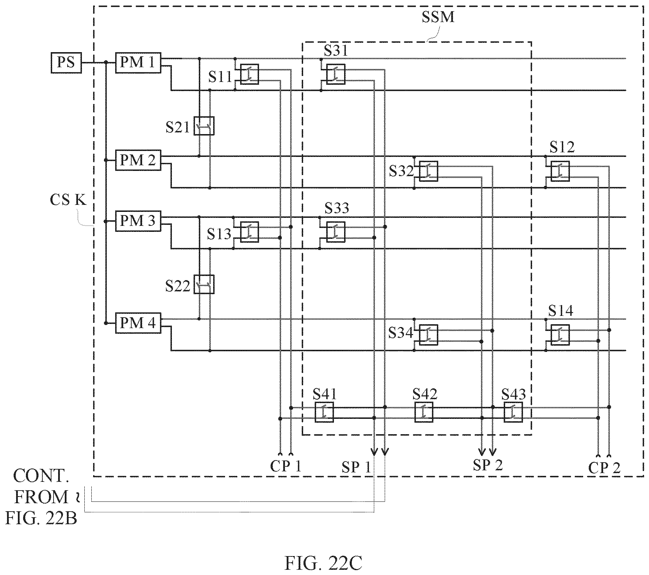

As shown in FIG. 22A, FIG. 22B, and FIG. 22C, the sharing system may include K parallel charging systems (namely, the charging system CS 1, the charging system CS 2, ..., and the charging system CS K in FIG. 21A, FIG. 21B, and FIG. 21C). Two adjacent charging systems are connected through a power sharing bus. For example, the charging system CS 1 and the charging system CS 2 are connected through the power sharing bus PSB 1.

It can be learned from FIG. 22A that the charging system CS 1 may charge different electric vehicles through the charging port CP 1 and the charging port CP 2 of the charging system CS 1, and may share a power with the charging system CS 2 through the sharing port SP 2 of the charging system CS 1.

Similarly, the charging system CS 2 may receive, through the sharing port CP 1 of the charging system CS 2, the power shared by the charging system CS 1, and charge different electric vehicles through the charging port CP 1 and the charging port CP 2 of the charging system CS 2. In addition, the charging system CS 2 may further share a power to a next charging system CS (for example, the charging system CS3, which is not shown in FIG. 22A, FIG. 22B, and FIG. 22C) through the sharing port SP 2 of the charging system CS 2.

It should be noted that, because power has a bidirectional transmission characteristic, as described above, the charging system CS 1 may share the power of the charging system CS 1 with the charging system CS 2, and the charging system CS 2 may further share a power of the charging system CS 2 with a next charging system CS. Certainly, the charging system CS 2 may further share the power of the charging system CS 2 with the charging system CS 1.

It should be further noted that a principle of power sharing between other charging systems (for example, the charging system CS K and the charging system CS (K-1) (the charging system CS (K-1) is not shown in FIG. 22A, FIG. 22B, and FIG. 22C)) in the sharing system provided in FIG. 22A, FIG. 22B, and FIG. 22C is the same as that described above. Details are not described herein again in this embodiment of this application.

In still another example, the sharing system provided in this embodiment of this application is described in detail with reference to K charging systems (each charging system CS includes (N+1) (namely, an odd quantity of) power modules) shown in FIG. 17.

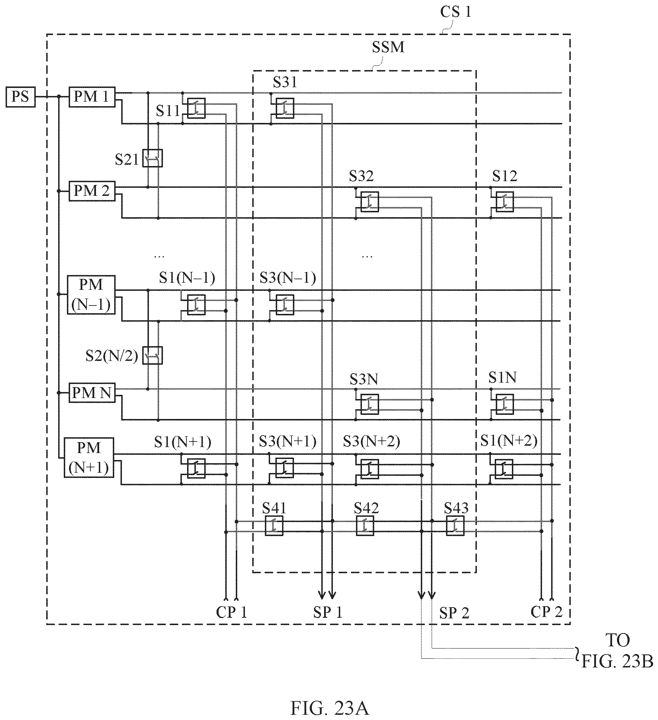

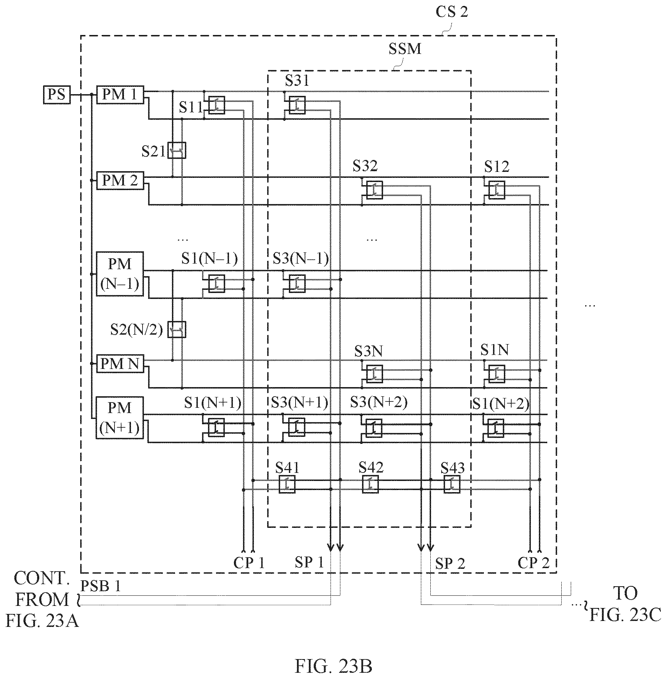

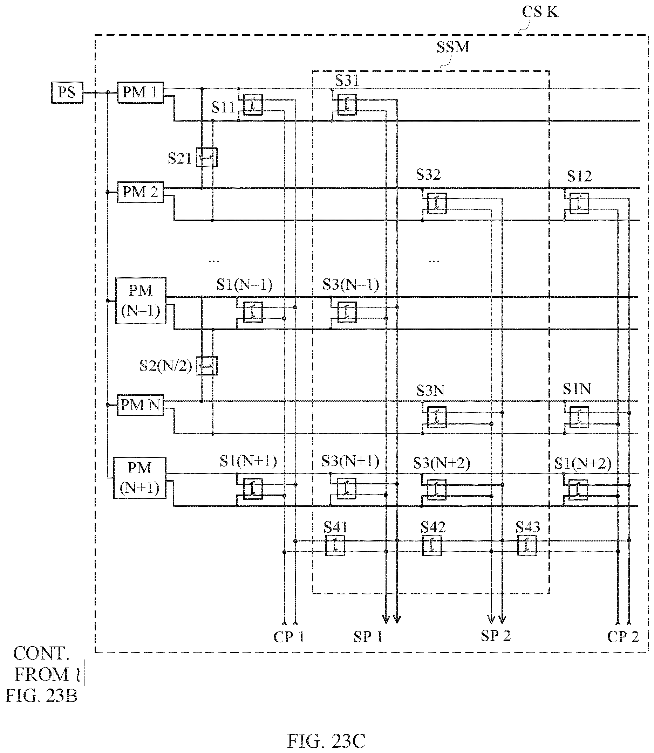

As shown in FIG. 23A, FIG. 23B, and FIG. 23C, the sharing system may include K parallel charging systems (namely, the charging system CS 1, the charging system CS 2, ..., and the charging system CS K in FIG. 21A, FIG. 21B, and FIG. 21C). Two adjacent charging systems are connected through a power sharing bus. For example, the charging system CS 1 and the charging system CS 2 are connected through the power sharing bus PSB 1.

It can be learned from FIG. 23A that the charging system CS 1 may charge different electric vehicles through the charging port CP 1 and the charging port CP 2 of the charging system CS 1, and may share a power with the charging system CS 2 through the sharing port SP 2 of the charging system CS 1.

Similarly, the charging system CS 2 may receive, through the sharing port SP 1 of the charging system CS 2, the power shared by the charging system CS 1, and charge different electric vehicles through the charging port CP 1 and the charging port CP 2 of the charging system CS 2. In addition, the charging system CS 2 may further share a power to a next charging system CS (for example, the charging system CS3, which is not shown in FIG. 23A, FIG. 23B, and FIG. 23C) through the sharing port SP 2 of the charging system CS 2.

It should be noted that, because power has a bidirectional transmission characteristic, as described above, the charging system CS 1 may share the power of the charging system CS 1 with the charging system CS 2, and the charging system CS 2 may further share a power of the charging system CS 2 with a next charging system CS. Certainly, the charging system CS 2 may further share the power of the charging system CS 2 with the charging system CS 1.

It should be further noted that a principle of power sharing between other charging systems (for example, the charging system CS K and the charging system CS (K-1) (the charging system CS (K-1) is not shown in FIG. 23A, FIG. 23B, and FIG. 23C)) in the sharing system provided in FIG. 23A, FIG. 23B, and FIG. 23C is the same as that described above. Details are not described herein again in this embodiment of this application.

With reference to FIG. 21A to FIG. 21C, FIG. 22A to FIG. 22C, and FIG. 23A to FIG. 23C, it can be learned that power sharing may be implemented between different charging systems in the sharing system, and is not limited by a quantity of power modules PMs in each charging system. In other words, regardless of a quantity of power modules in the charging system, power sharing may be implemented between different charging systems in the sharing system. In addition, each charging system may further charge different electric vehicles while sharing power.

In conclusion, through the use of the sharing system, including the K charging systems shown in FIG. 21A to FIG. 21C, FIG. 22A to FIG. 22C, and FIG. 23A to FIG. 23C, that is provided in this embodiment of this application, each charging system can charge different electric vehicles, and power sharing can be implemented between all the charging systems.

It should be noted that, for detailed descriptions of the charging system, refer to the foregoing descriptions. Details are not described herein again in this embodiment of this application.

In a possible implementation, a power sharing bus connected adjacent charging systems may be a copper bar, an aluminum bar, a cable, or the like. A type of the power sharing bus is not limited in this embodiment of this application.

In another possible implementation, a control switch or a connecting member may be disposed on the power sharing bus.

Optionally, the control switch may be a contactor, a circuit breaker, an isolation switch, or the like. Similarly, the contactor herein may be a single-contact contactor (also referred to as a single-pole contactor), or may be a dual-contact contactor (also referred to as a double-pole contactor). Certainly, the contactor may alternatively be another type of contactor. This is not limited in this embodiment of this application.

Optionally, the connecting member may be a connector, a detachable copper bar, or the like. This is not limited in this application.

Certainly, in this application, another device that can implement a connection/disconnection function may be disposed on the power sharing bus. This is not limited in this embodiment of this application.

A person of ordinary skill in the art may be aware that units described with reference to the examples in embodiments disclosed in this specification can be implemented by using electronic hardware or the like. A person skilled in the art may use different structures to implement the described functions for each particular application, but it should not be considered that the implementation goes beyond the scope of this application.

In several embodiments provided in this application, it should be understood that the disclosed system may be implemented in other manners. For example, the described system embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The foregoing descriptions are merely specific implementations of this application, and the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

## Claims

1. A charging system, comprising a plurality of power modules, a distributing switch module, and a plurality of charging ports, wherein
the distributing switch module comprises a first distributing unit and a second distributing unit, a first part of power modules in the plurality of power modules are connected to a first charging port in the plurality of charging ports through the first distributing unit, and a second part of power modules in the plurality of power modules are connected to a second charging port in the plurality of charging ports through the second distributing unit;
each power module in the first part of power modules and the second part of power modules is configured to convert a first power from an external power supply and output a second power;
the first distributing unit is configured to distribute, to the first charging port, the second power output by each power module in the first part of power modules;
the second distributing unit is configured to distribute, to the second charging port, the second power output by each power module in the second part of power modules;
the first charging port is configured to charge a first terminal based on the power distributed by the first distributing unit; and
the second charging port is configured to charge a second terminal based on the power distributed by the second distributing unit.

2. The charging system according to claim 1, wherein both the first distributing unit and the second distributing unit comprise a plurality of first switching switches.

3. The charging system according to claim 2, wherein the distributing switch module further comprises a plurality of second switching switches; and
the plurality of second switching switches each connect two adjacent power modules in the first part of power modules and the second part of power modules.

4. The charging system according to claim 2 or 3, wherein the charging system further comprises a sharing switch module and a plurality of sharing ports;
the plurality of sharing ports comprise a first sharing port and a second sharing port; and
the sharing switch module connects the first part of power modules to the first sharing port, and the sharing switch module connects the second part of power modules to the second sharing port.

5. The charging system according to claim 4, wherein the sharing switch module comprises a first sharing unit and a second sharing unit;
the first part of power modules are connected to the first sharing port through the first sharing unit; and
the second part of power modules are connected to the second sharing port through the second sharing unit.

6. The charging system according to claim 5, wherein the sharing switch module further comprises a plurality of fourth switching switches; and
the plurality of fourth switching switches connect the first charging port, the second charging port, the first sharing port, and the second sharing port.

7. The charging system according to claim 5 or 6, wherein both the first sharing unit and the second sharing unit comprise a plurality of third switching switches.

8. The charging system according to any one of claims 1 to 7, wherein the power module is a DC/DC conversion module or an AC/DC conversion module.

9. The charging system according to any one of claims 1 to 8, wherein the first power is determined based on an output voltage and an output current of the external power supply, and the output voltage of the external power supply is a direct current voltage or an alternating current voltage; and
the second power is determined based on an output voltage and an output current of the power module, and the output voltage of the power module is a direct current voltage.

10. A sharing system, comprising at least two parallel charging systems according to any one of claims 1 to 9.

11. The sharing system according to claim 10, wherein the at least two charging systems are connected to each other through a power sharing bus.

12. The sharing system according to claim 11, wherein a control switch or a connecting member is disposed on the power sharing bus.

13. The sharing system according to claim 12, wherein the control switch is any one of the following:
a contactor, a circuit breaker, or an isolation switch.

14. The sharing system according to claim 12 or 13, wherein the connecting member is a connector or a detachable copper bar.

15. The sharing system according to any one of claims 10 to 14, wherein the power sharing bus is any one of the following:
a copper bars, an aluminum bar, and a cable.
